# EUROPEAN PATENT APPLICATION

(11) **EP 3 668 208 A1**
(43) Date of publication of application: **17.06.2020**
(21) Application number: 18844270.1
(22) Date of filing: 27.07.2018
(51) Int. Cl.: H04W 72/02, H04B 1/7143, H04J 3/00, H04L 1/08, H04W 72/10, H04W 4/38

(54) **COMMUNICATION DEVICE AND METHOD**

(30) Priority: 09.08.2017 JP 2017154207
(71) Applicant: Sony Corporation, Tokyo 108-0075 (JP)
(72) Inventor: KIRIYAMA Sawako, Tokyo 108-0075 (JP); SATO Masanori, Tokyo 108-0075 (JP)
(74) Representative: Witte, Weller & Partner Patentanwälte mbB
(86) International application number: PCT/JP2018/028200
(87) International publication number: WO 2019/031267

(57) **Abstract**

The present technique relates to communication apparatus and method that can suppress influence on an application of data transmission in one-way communication. In one-way communication, a radio resource according to a frequency of transmission of data of an application is used to transmit a radio signal corresponding to the data. The present disclosure can be applied to, for example, a transmission apparatus and a communication apparatus of a communication system that performs one-way communication, an information processing apparatus, an electronic device, a computer, a program, a storage medium, a system, and the like.

## Description

### [Technical Field]

The present technique relates to communication apparatus and method, and particularly, to communication apparatus and method that can suppress influence on an application of data transmission in one-way communication.

### [Background Art]

In recent years, LPWA (Low Power Wide Area) communication is becoming more prevalent as a wireless communication scheme used in IoT (Internet of Things) and the like (for example, see NPL 1). The LPWA communication is wireless communication that can transfer information in a wide range of, for example, approximately several dozen to 100 km, and low power consumption and low cost of a terminal can be realized. Therefore, the LPWA communication is suitable for the IoT in transferring a small amount of information, such as sensor information.

In a system of SIGFOX (registered trademark) described in NPL 1, a communication scheme is adopted, in which the transfer capacity is 12 bytes, the communication direction is upbound only, the communication speed is 100 bps, and the limit in the number of communications is 140 times/day at most.

### [Citation List]

### [Non Patent Literature]

### [NPL 1]

KYOCERA Communication Systems Co., Ltd., LPWA Solution Department, "Introduction of SIGFOX network," http://www.soumu.go.jp/main_content/000452035.pdf

### [Summary]

### [Technical Problem]

However, in one-way communication as described in NPL 1, a terminal cannot receive a signal, and it is difficult for the terminal and a base station (reception side) to perform signaling in advance to adjust allocation of radio resources. Therefore, in the one-way communication, the base station may fail to receive a signal due to a collision or the like of signals transmitted from a plurality of terminals.

The failure in receiving the signal affects an application that uses received data. Particularly, the lower the frequency of transmission of data is, the longer the interval before the next reception of data is. Therefore, the application may be influenced more.

The present disclosure has been made in view of the circumstances, and the present disclosure can suppress influence on an application of data transmission in one-way communication.

### [Solution to Problem]

An aspect of the present technique provides a communication apparatus that performs one-way communication, the communication apparatus including a transmission unit that uses a radio resource according to a frequency of transmission of data of an application to transmit a radio signal corresponding to the data.

An aspect of the present technique provides a communication method of a communication apparatus that performs one-way communication, the communication method including using a radio resource according to a frequency of transmission of data of an application to transmit a radio signal corresponding to the data.

In the communication apparatus and method according to the aspects of the present technique, the radio resource according to the frequency of transmission of the data of the application is used in the one-way communication, and the radio signal corresponding to the data is transmitted.

### [Advantageous Effects of Invention]

According to the present technique, a signal can be transmitted. In addition, according to the present technique, influence on an application of data transmission in one-way communication can be suppressed.

### [Brief Description of Drawings]

[FIG. 1]

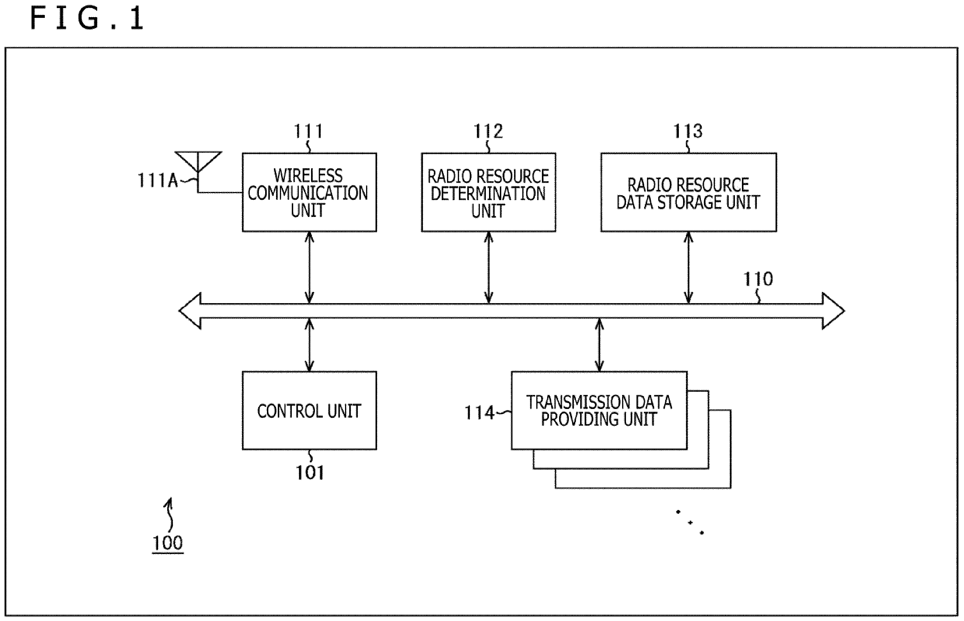

   FIG. 1 is a diagram illustrating a main configuration example of a communication apparatus.
[FIG. 2]

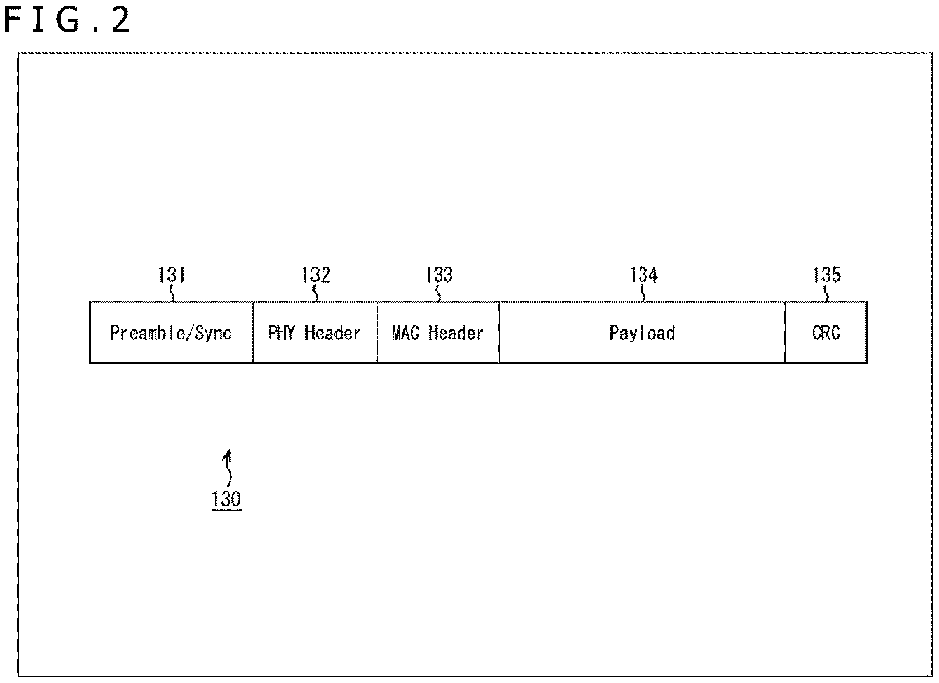

   FIG. 2 is a diagram illustrating an example of a frame format of a signal.
[FIG. 3]

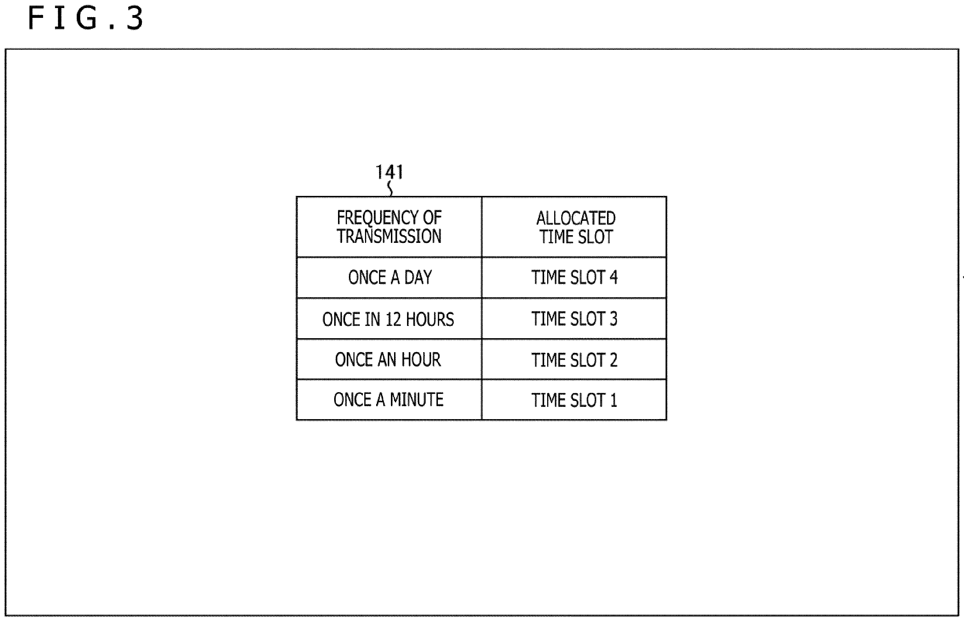

   FIG. 3 is a diagram describing an example of allocation of time slots for each frequency of transmission.
[FIG. 4]

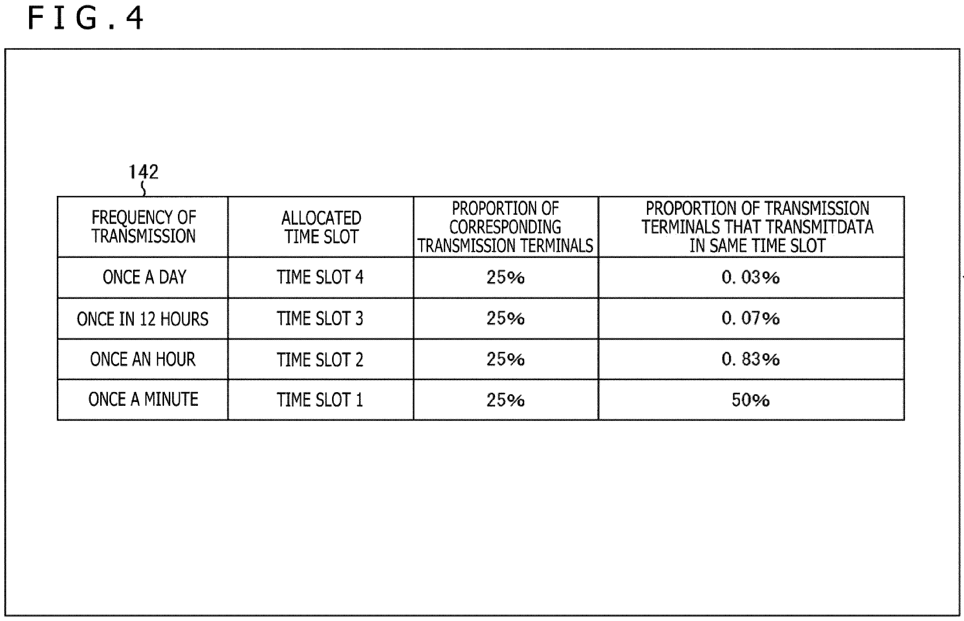

   FIG. 4 is a diagram describing an example of proportions of terminals and proportions of overlapping time slots for each frequency of transmission.
[FIG. 5]

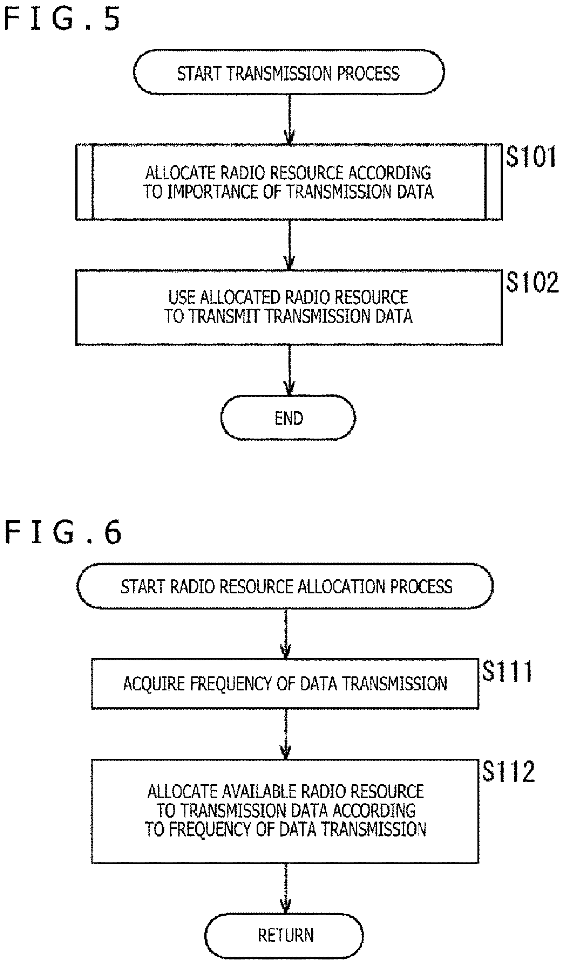

   FIG. 5 is a flow chart describing an example of a flow of a transmission process.
[FIG. 6]
   FIG. 6 is a flow chart describing an example of a flow of a radio resource allocation process.
[FIG. 7]

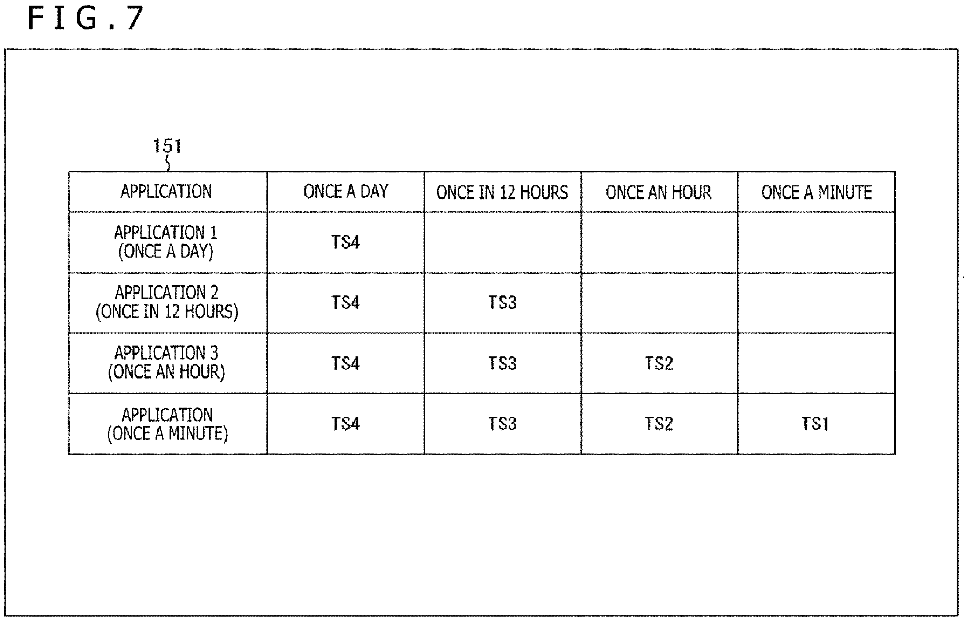

   FIG. 7 is a diagram illustrating an example of available time slots for each frequency of transmission.
[FIG. 8]

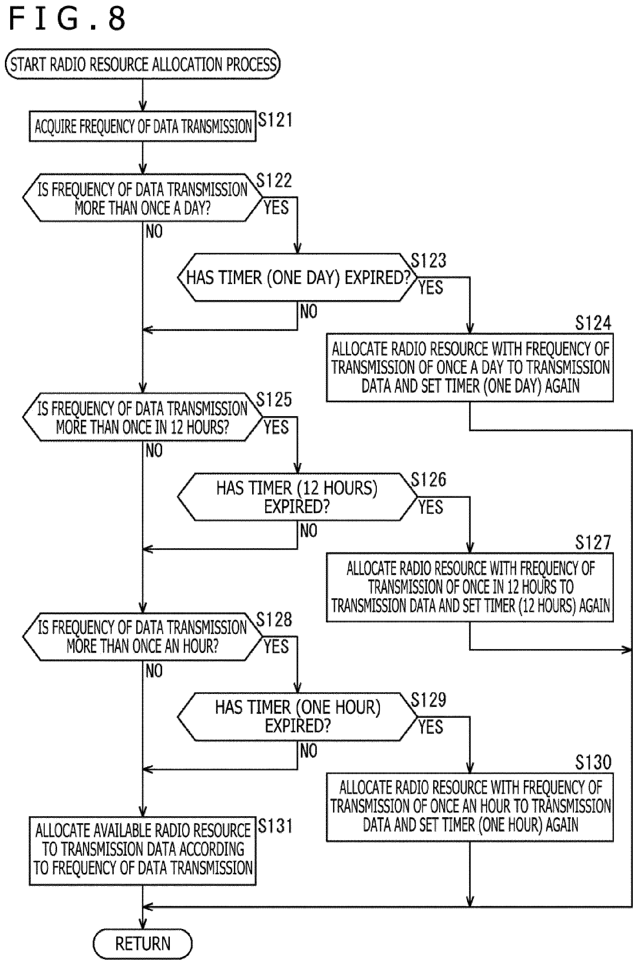

   FIG. 8 is a flow chart describing an example of a flow of a radio resource allocation process.
[FIG. 9]

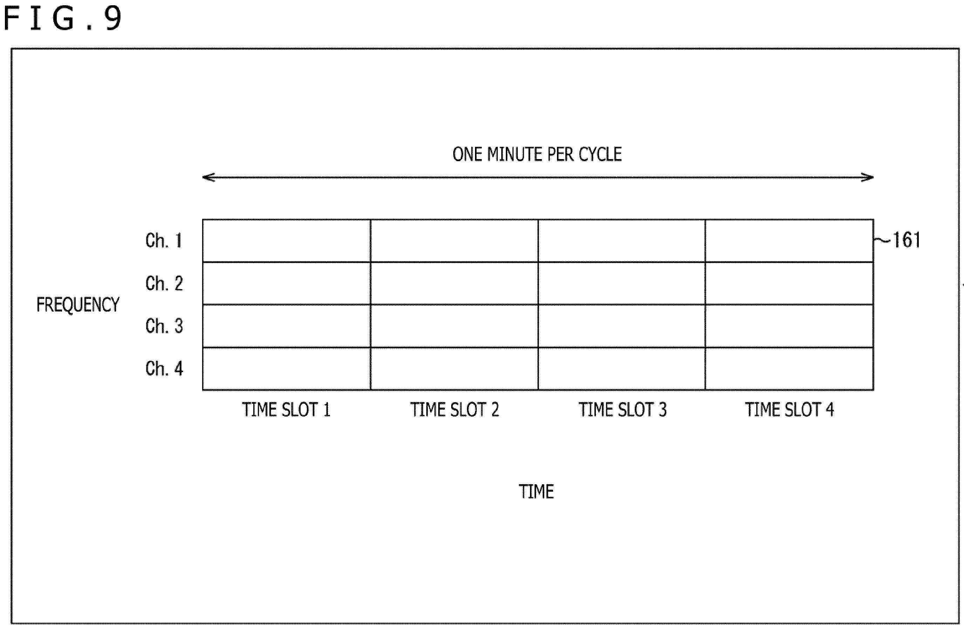

   FIG. 9 is a diagram illustrating an example of radio resources including time slots and channels.
[FIG. 10]

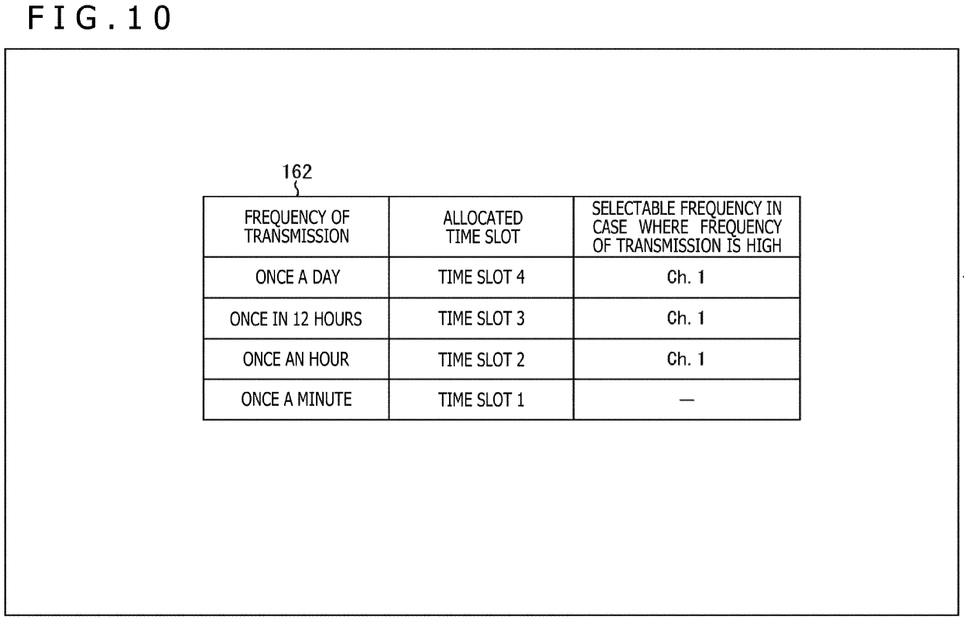

   FIG. 10 is a diagram describing an example of allocation of time slots and channels for each frequency of transmission.
[FIG. 11]

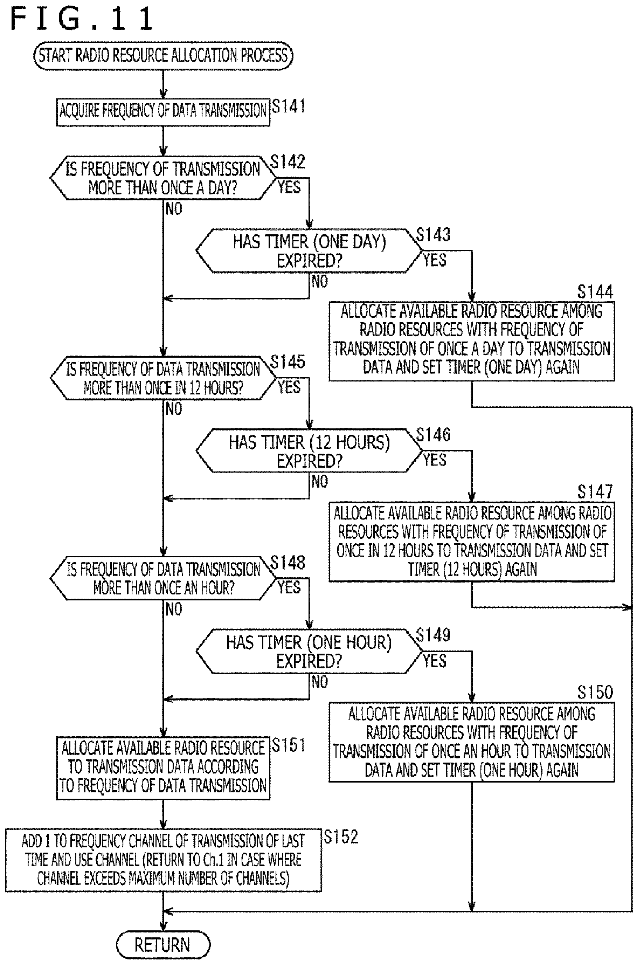

   FIG. 11 is a flow chart describing an example of a flow of a radio resource allocation process.
[FIG. 12]

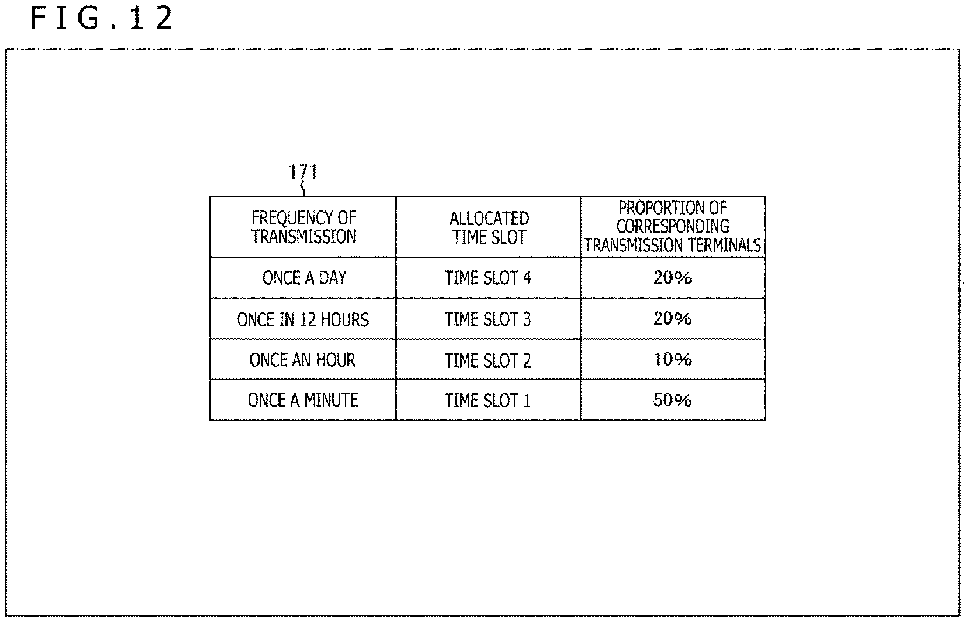

   FIG. 12 is a diagram describing an example of proportions of terminals for each frequency of transmission.
[FIG. 13]

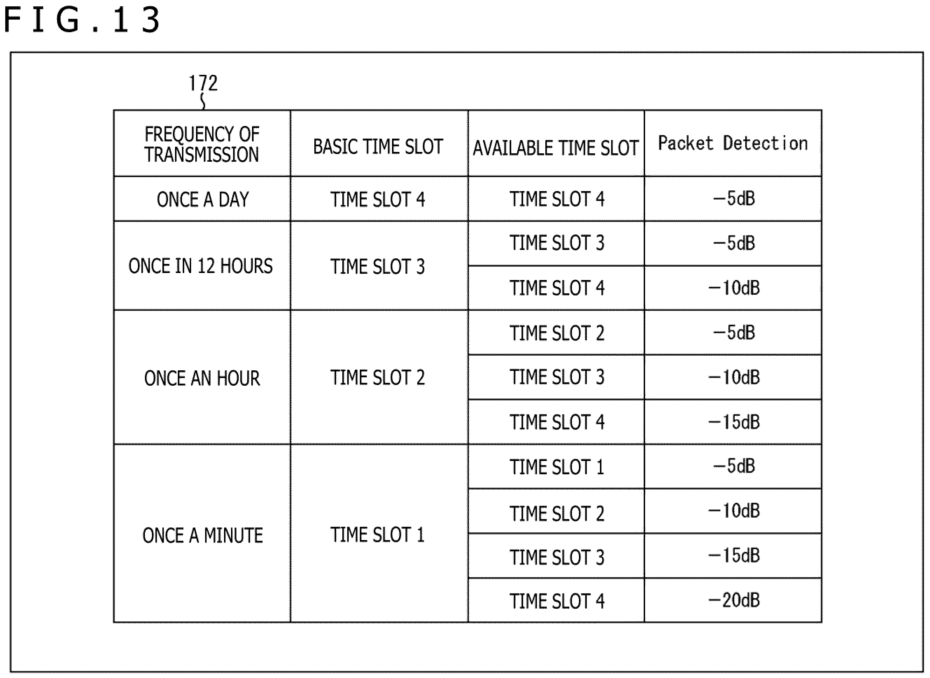

   FIG. 13 is a diagram illustrating an example of allocation of time slots and thresholds for each frequency of transmission.
[FIG. 14]

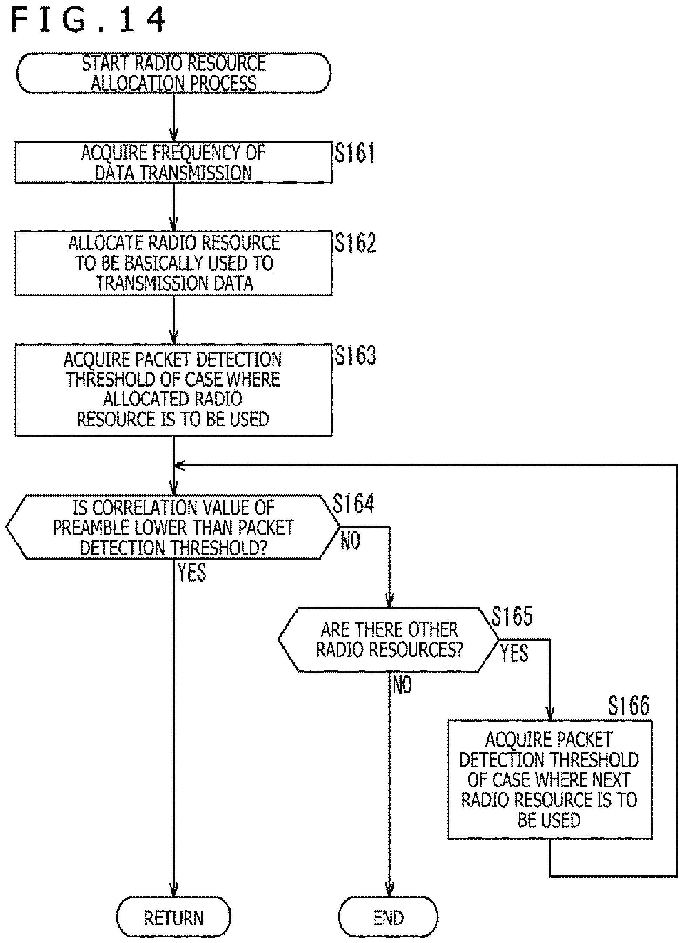

   FIG. 14 is a flow chart describing an example of a flow of a radio resource allocation process.
[FIG. 15]

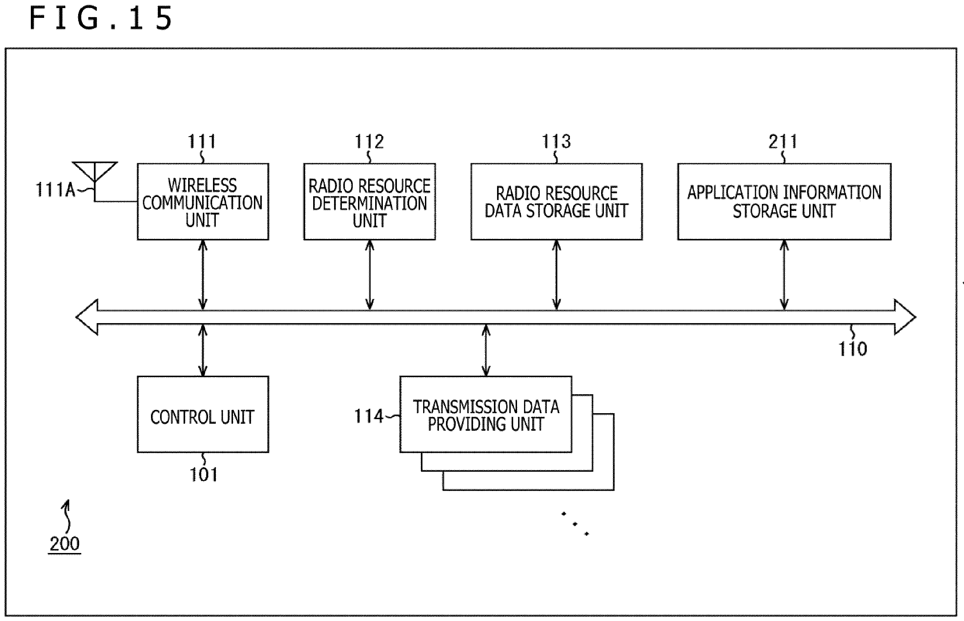

   FIG. 15 is a diagram illustrating a main configuration example of a communication apparatus.
[FIG. 16]

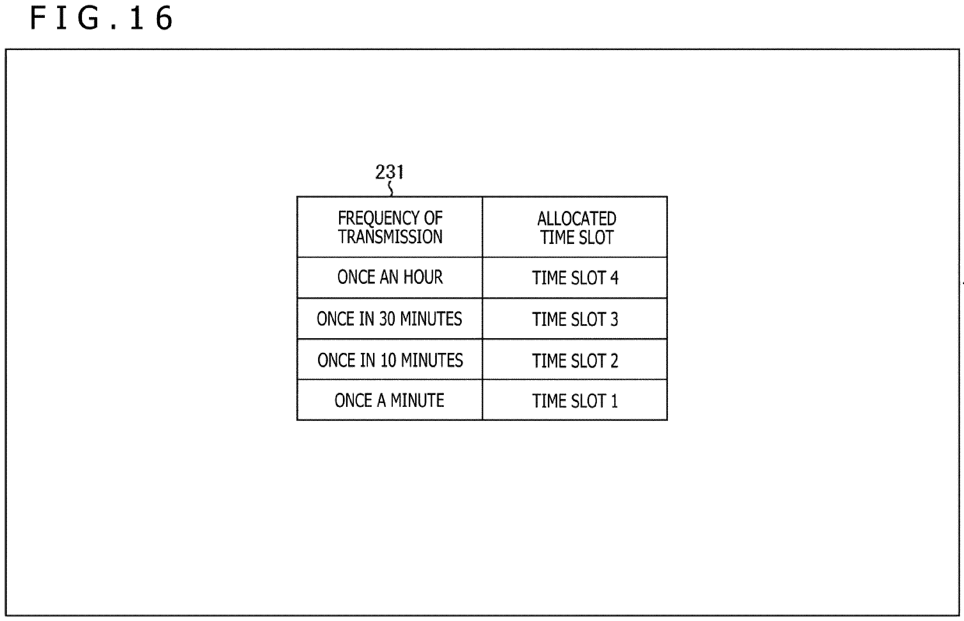

   FIG. 16 is a diagram illustrating an example of allocation of time slots for each minimum frequency of collection.
[FIG. 17]

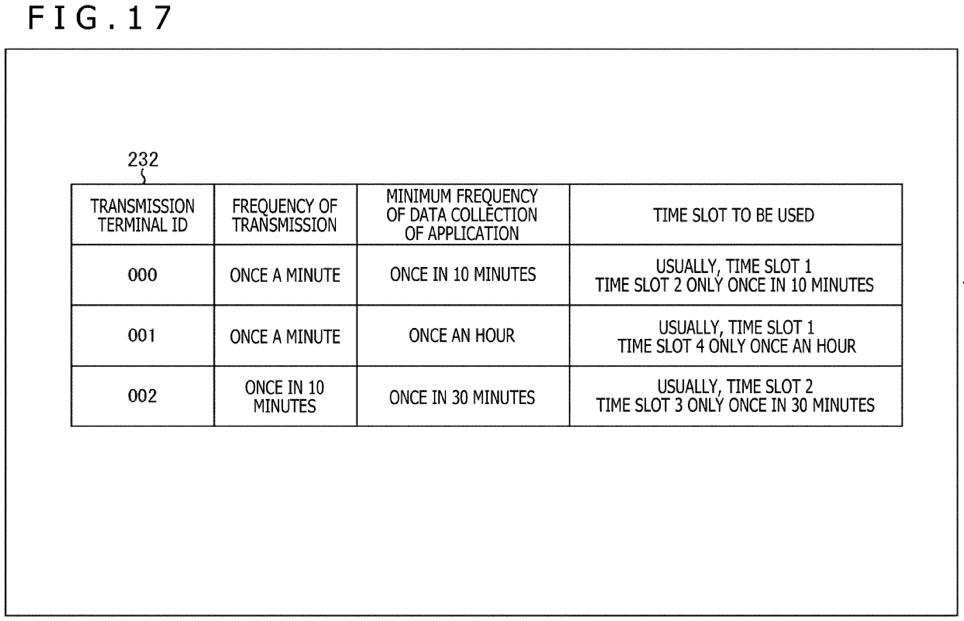

   FIG. 17 is a diagram illustrating an example of selecting time slots to be used.
[FIG. 18]

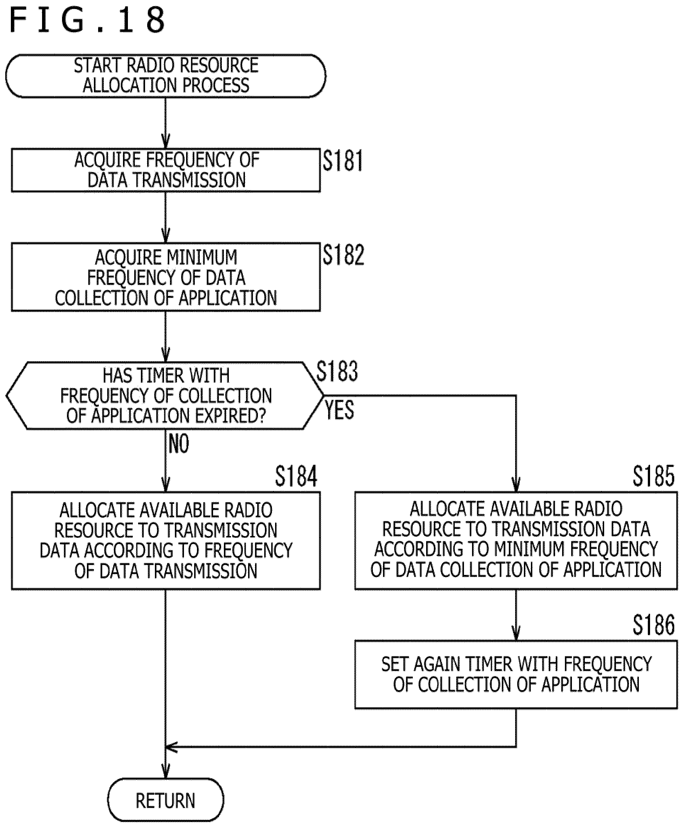

   FIG. 18 is a flow chart describing an example of a flow of a radio resource allocation process.
[FIG. 19]

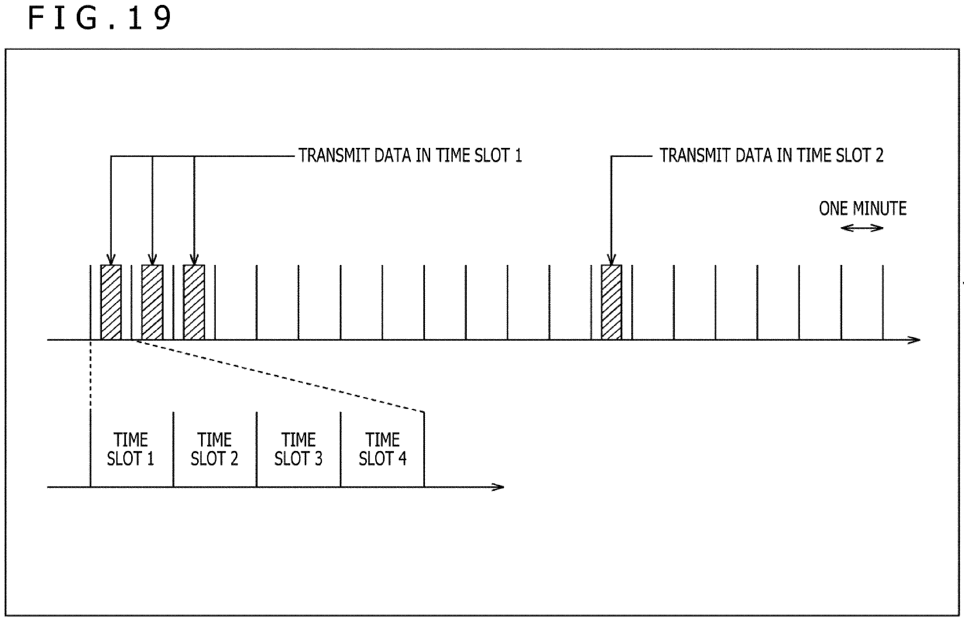

   FIG. 19 is a diagram illustrating an example of selecting time slots to be used.
[FIG. 20]

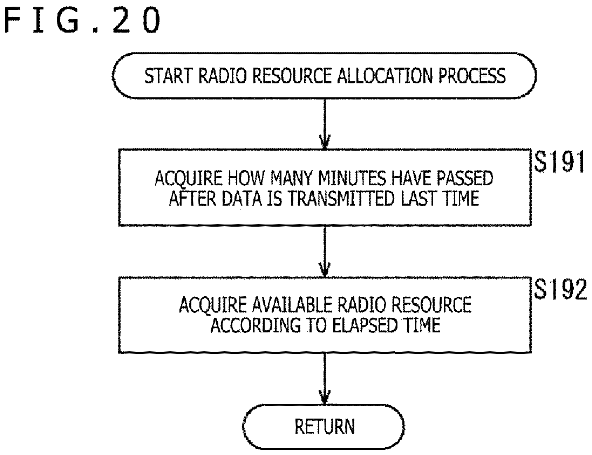

   FIG. 20 is a flow chart describing an example of a flow of a radio resource allocation process.
[FIG. 21]

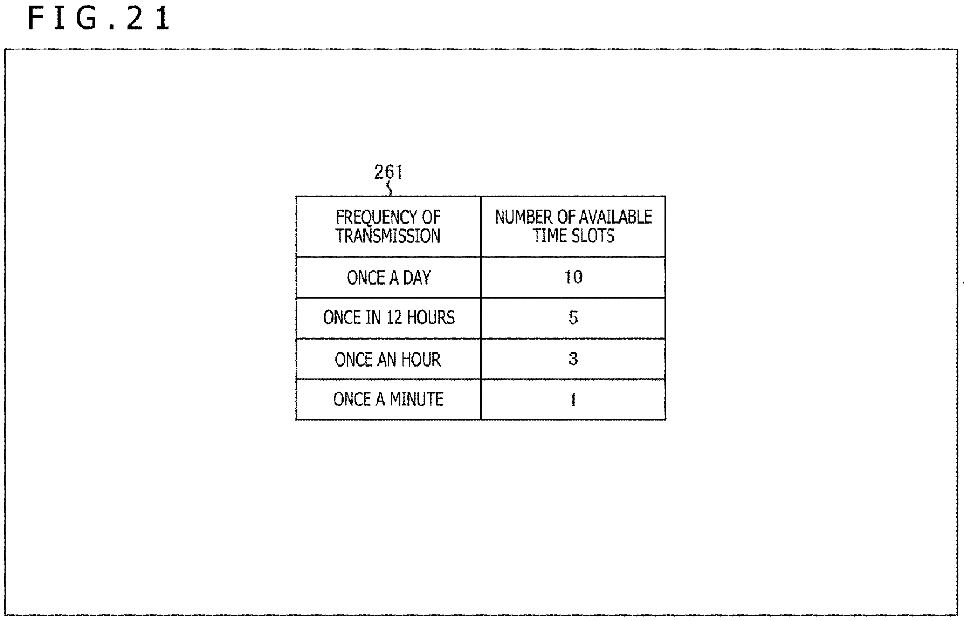

   FIG. 21 is a diagram illustrating an example of the number of available time slots for each frequency of transmission.
[FIG. 22]

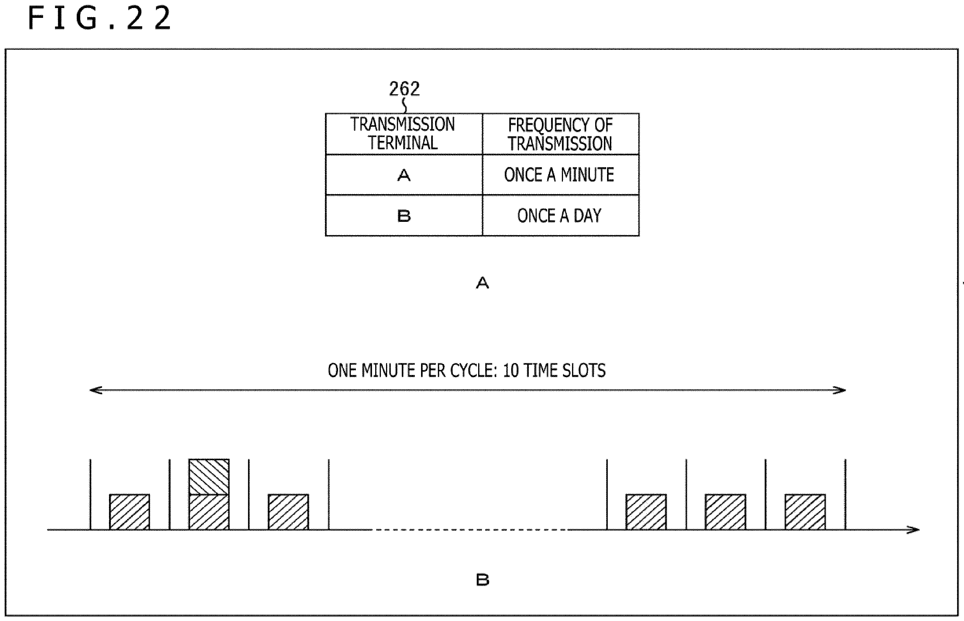

   FIG. 22 is a diagram illustrating an example of a state of repeated transmission.
[FIG. 23]

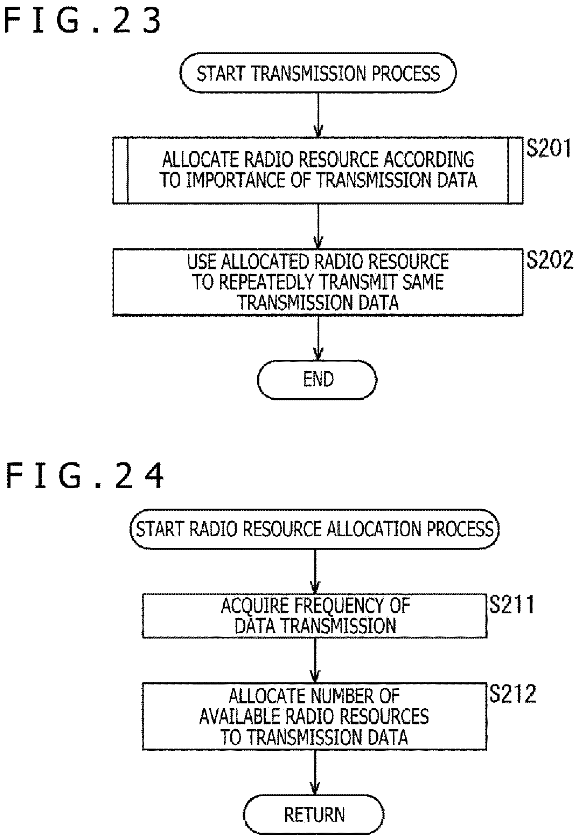

   FIG. 23 is a flow chart describing an example of a flow of a transmission process.
[FIG. 24]
   FIG. 24 is a flow chart describing an example of a flow of a radio resource allocation process.
[FIG. 25]

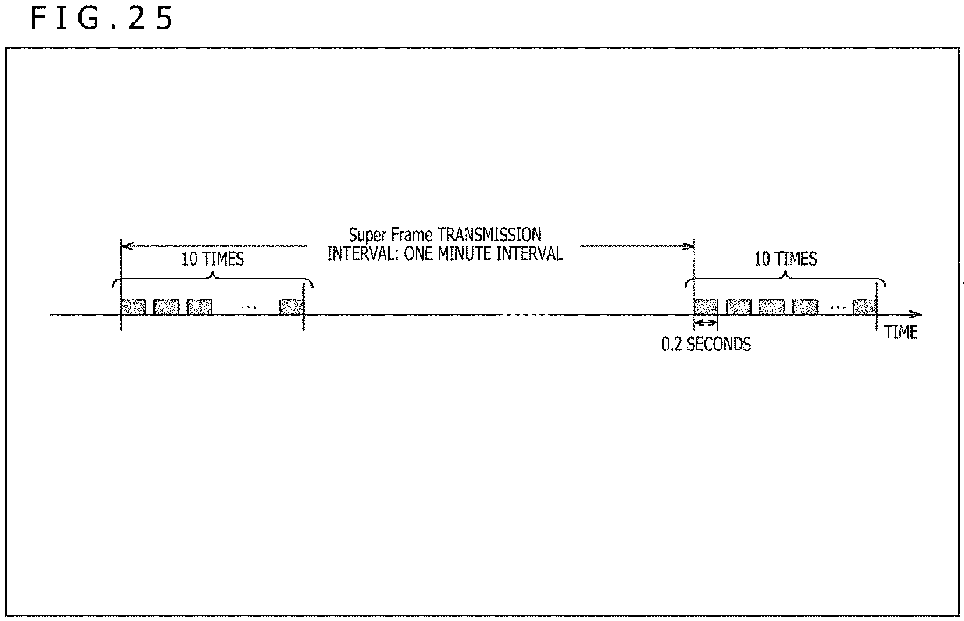

   FIG. 25 is a diagram illustrating an example of transferring the same packet for a plurality of times in a new communication scheme.
[FIG. 26]

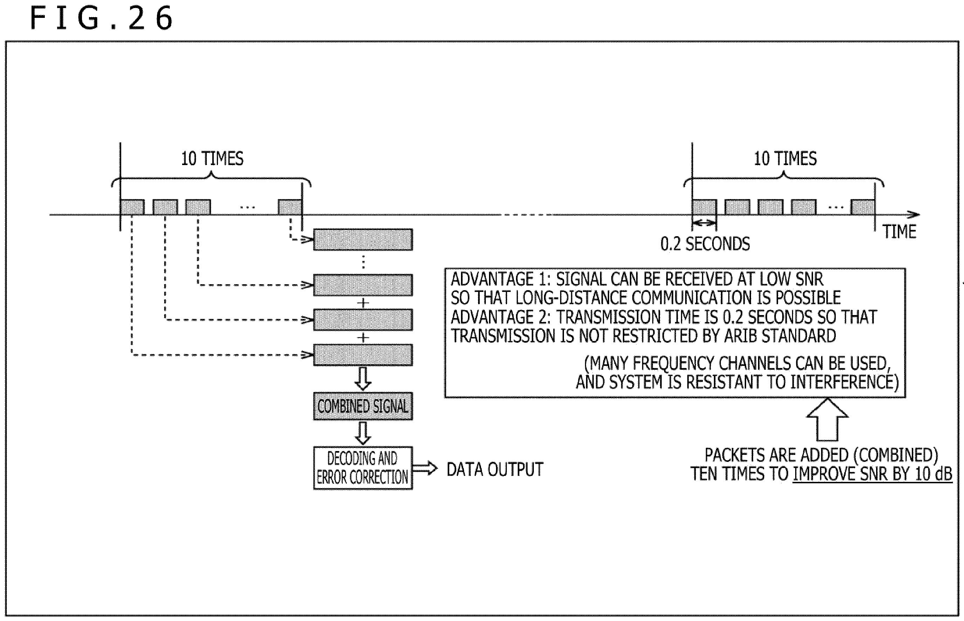

   FIG. 26 is a diagram illustrating an example of receiving packets on a reception side in the new communication scheme.
[FIG. 27]

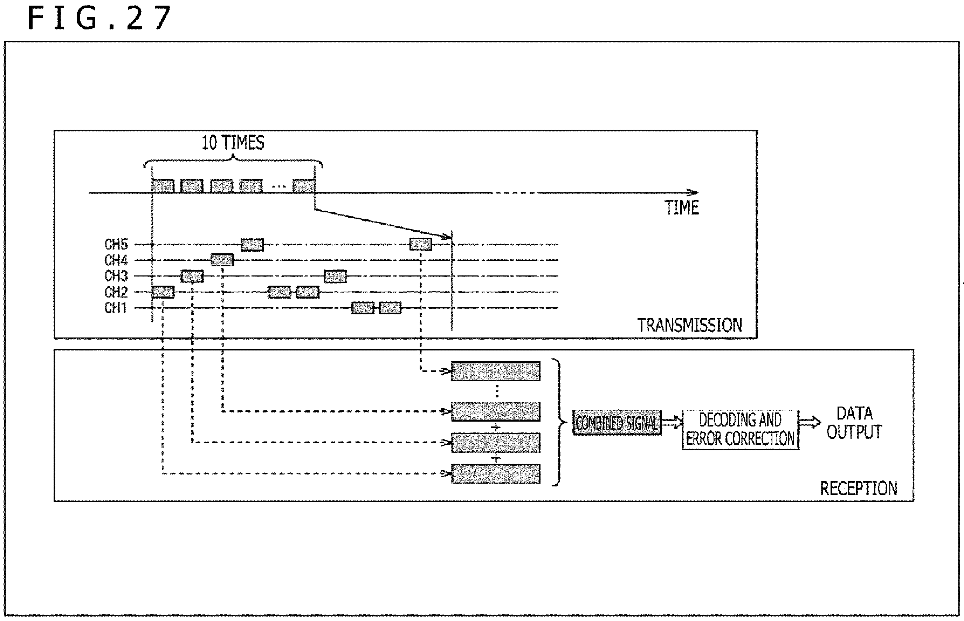

   FIG. 27 is a diagram illustrating an example of frequency hopping.
[FIG. 28]

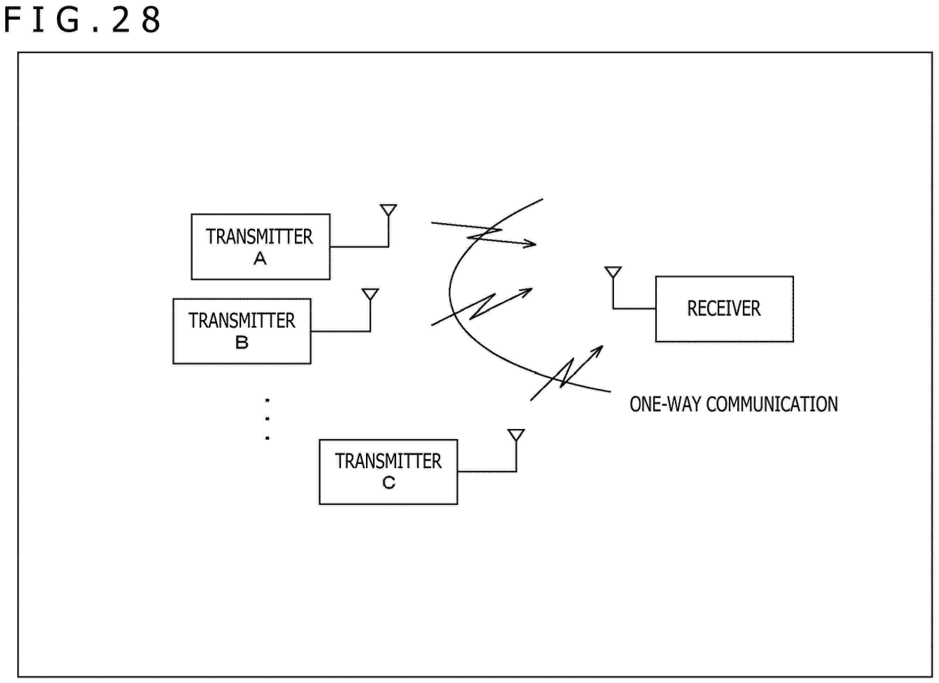

   FIG. 28 is a diagram illustrating an example of a wireless system in which an interference may occur.
[FIG. 29]

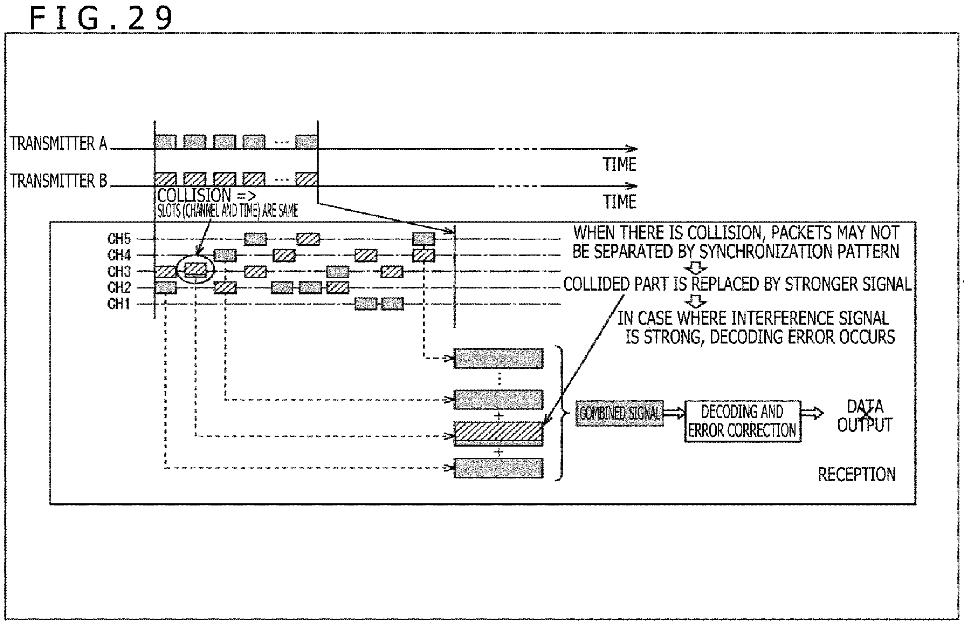

   FIG. 29 is a diagram illustrating an example of an interference in a case where frequency hopping is performed in the wireless system.
[FIG. 30]

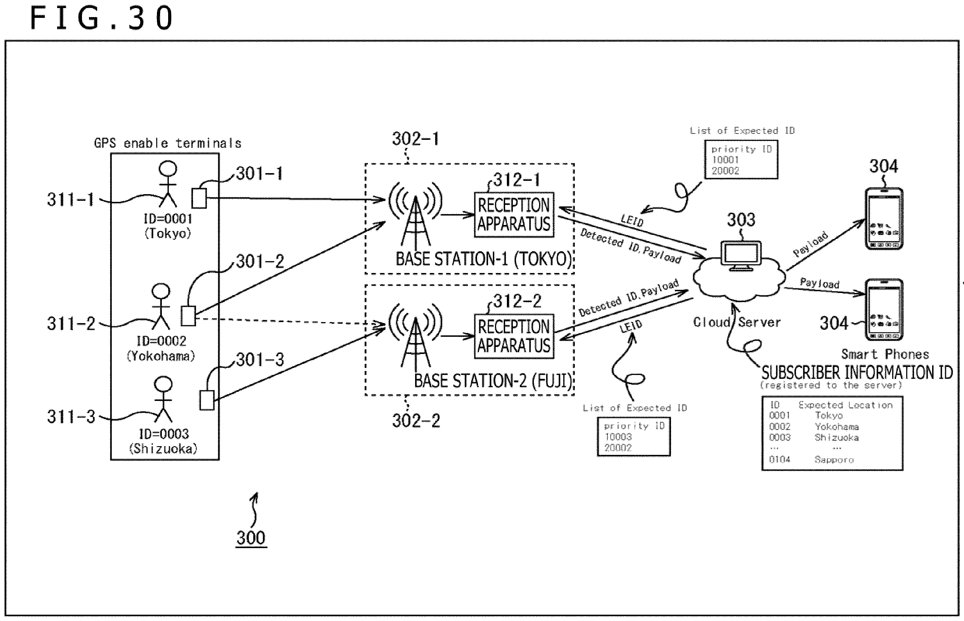

   FIG. 30 is a diagram illustrating a configuration example of a position notification system as an embodiment of the wireless system.
[FIG. 31]

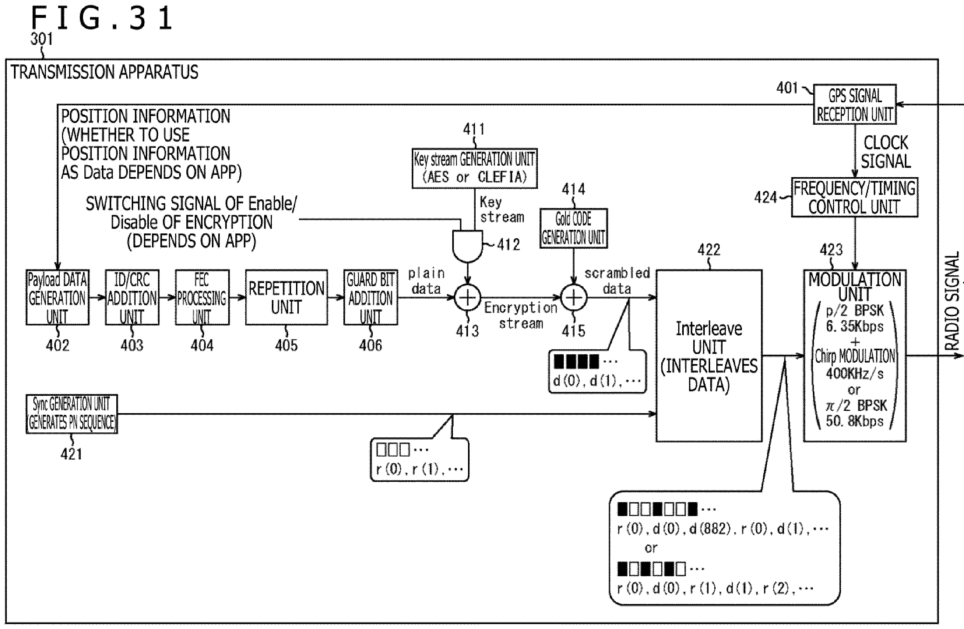

   FIG. 31 is a block diagram illustrating a configuration example of a transmission apparatus.
[FIG. 32]

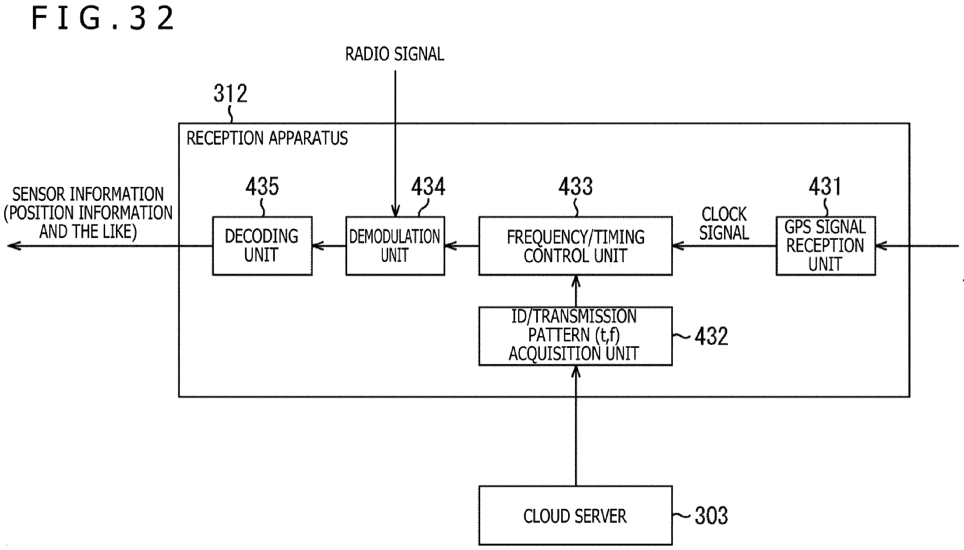

   FIG. 32 is a block diagram illustrating a configuration example of a reception apparatus.
[FIG. 33]

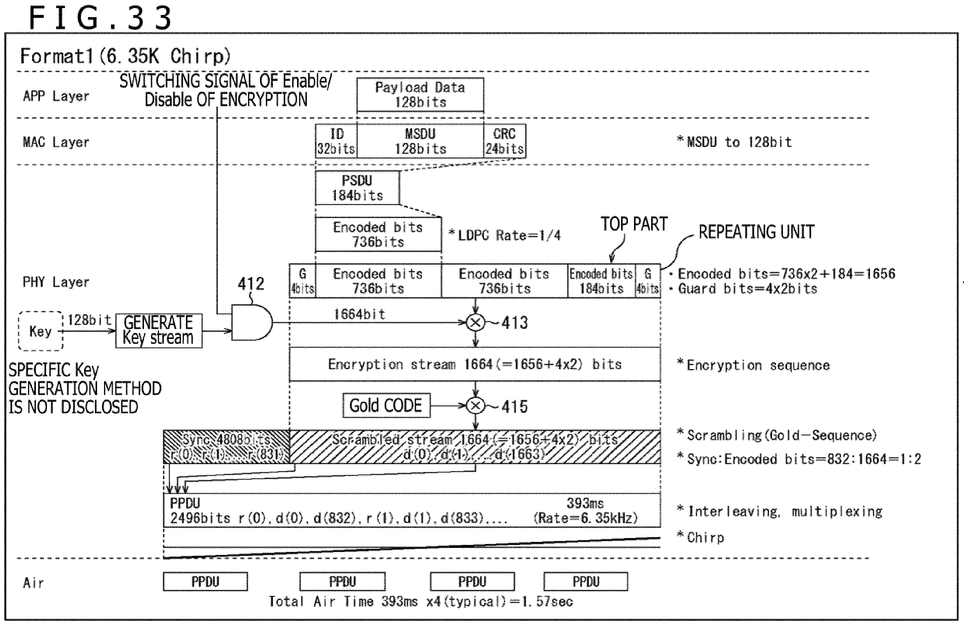

   FIG. 33 is a diagram illustrating an example of a first format of data handled in the transmission apparatus.
[FIG. 34]

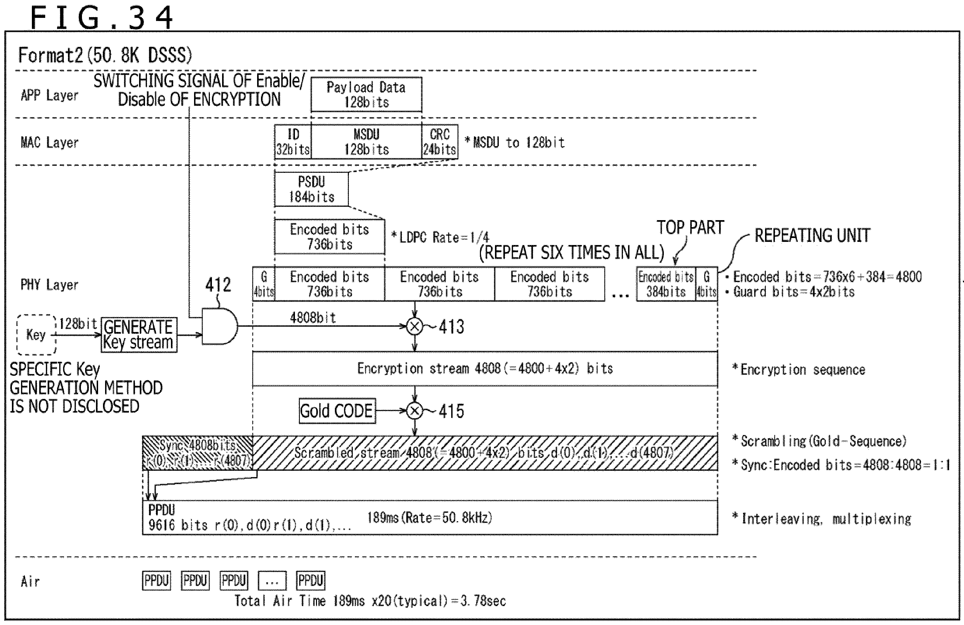

   FIG. 34 is a diagram illustrating an example of a second format of data handled in the transmission apparatus.
[FIG. 35]

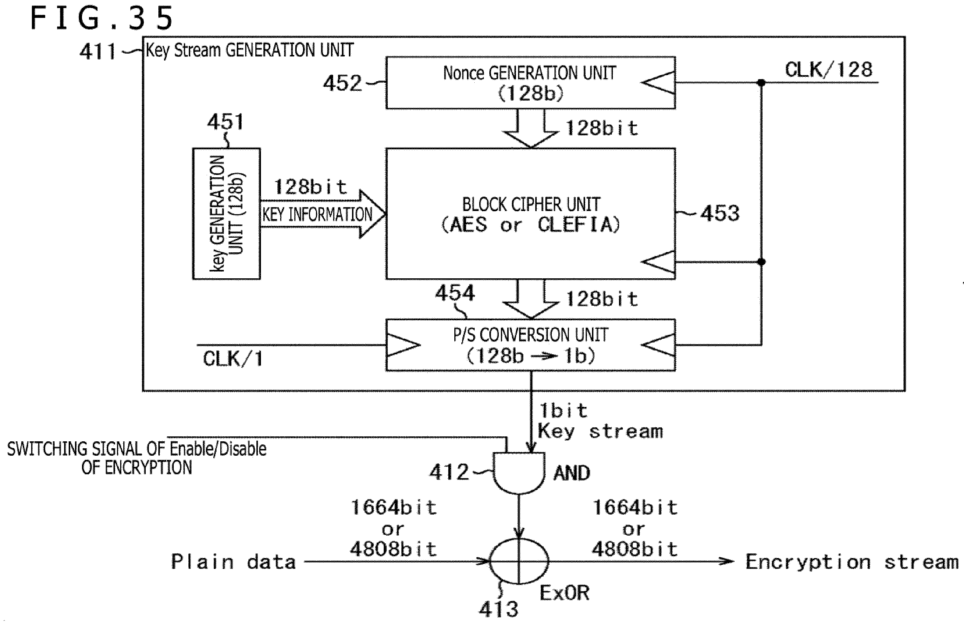

   FIG. 35 is a block diagram illustrating a configuration example of a key stream generation unit.
[FIG. 36]

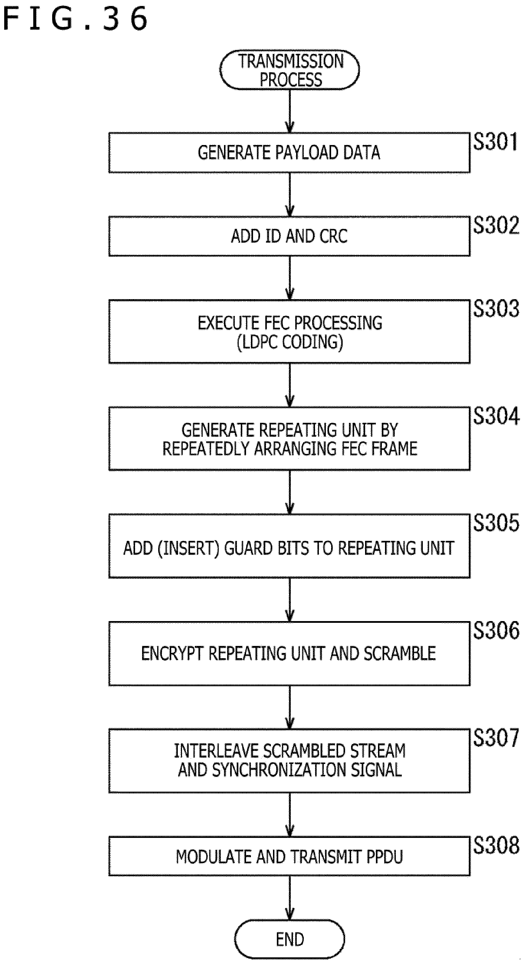

   FIG. 36 is a flow chart describing an example of a transmission process of the transmission apparatus.
[FIG. 37]

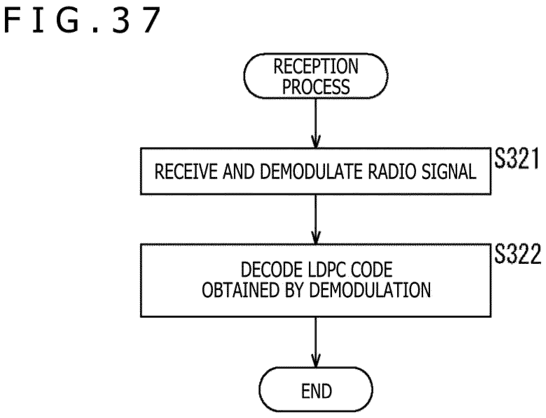

   FIG. 37 is a flow chart describing an example of a reception process of the reception apparatus.
[FIG. 38]

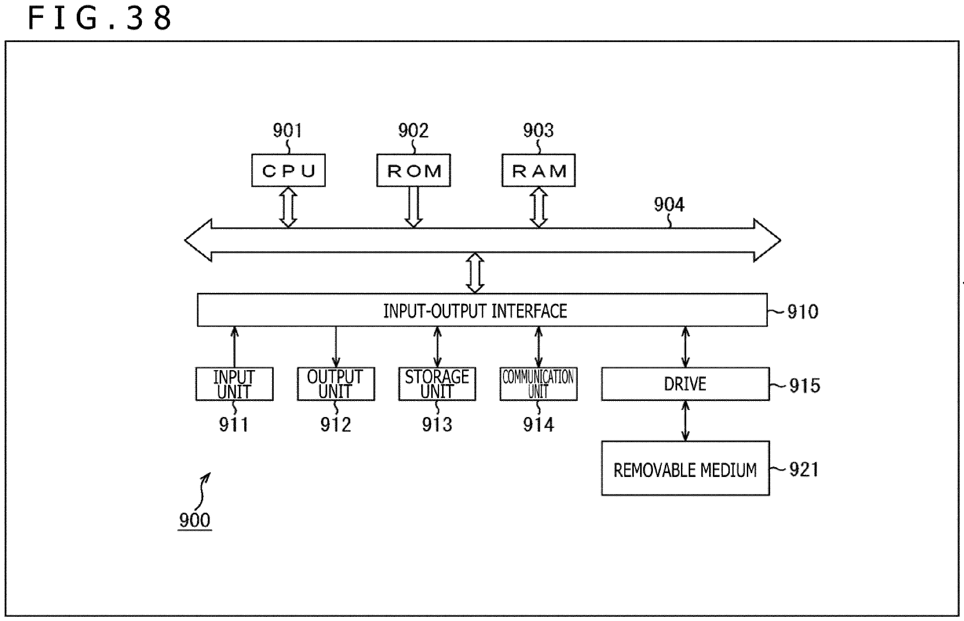

   FIG. 38 is a block diagram illustrating a main configuration example of a computer.

### [Description of Embodiments]

Hereinafter, modes for carrying out the present disclosure (hereinafter, referred to as embodiments) will be described. Note that the embodiments will be described in the following order.
1. First Embodiment (Radio Resource Allocation for Each Frequency of Transmission)
2. Second Embodiment (Less Frequent Use of Radio Resources)
3. Third Embodiment (Use of Frequency Band)
4. Fourth Embodiment (Less Frequent Radio Resources Selectable)
5. Fifth Embodiment (Transmission at Minimum Frequency of Collection)
6. Sixth Embodiment (Radio Resource Allocation According to Elapsed Time)
7. Seventh Embodiment (Repetition for the Number of Times According to Frequency of Transmission)
8. Eighth Embodiment (Application Example of Communication System)
9. Others

### <1. First Embodiment>

### <LPWA>

Conventionally, in a method adopted in a wireless communication system, such as LTE (Long Term Evolution), a terminal performs signaling with a base station in advance and uses a radio resource allocated by the base station to transmit data.

However, in a wireless communication system, such as IoT (Internet of Things), for transferring a small amount of information, such as sensor information, it is not preferable to perform the signaling for allocating a radio resource from the viewpoint of low power consumption and low cost of the terminal. In recent years, an example of the wireless communication scheme used in the IoT or the like that is becoming more prevalent includes LPWA (Low Power Wide Area) communication that can transfer information in a wide range of approximately several dozen to 100 km.

Furthermore, in the case of the wireless communication system such as IoT, one-way communication in the direction from the terminal to the base station is often adopted, and in this case, the base station cannot allocate a radio resource to the terminal.

For example, in the communication scheme adopted in the system of SIGFOX (registered trademark) described in NPL 1, the transfer capacity is 12 bytes, the communication direction is upbound only, the communication speed is 100 bps, and the limit in the number of communications is 140 times/day at most.

In the one-way communication, the terminal cannot receive a signal, and it is difficult for the terminal and the base station (reception side) to perform signaling in advance to adjust the allocation of radio resources. Therefore, in the one-way communication, a plurality of terminals are permitted in some degree to use the same radio resources to transmit data, and the terminals need to autonomously determine the radio resources. Therefore, due to a collision or the like of signals transmitted from the plurality of terminals, the base station may fail to receive the signals.

For example, in a case where data used in an application of the base station (reception side) is to be transferred in the one-way communication, missing of data or the like occurs in the application if the base station fails to receive the signals (that is, receive the data) as described above, and there may be a failure, such as stop of the process.

In general, it is likely that such a failure continues at least until the reception of the next data is successful. There are a wide variety of use cases in the IoT, and the frequency of collection of data significantly varies, from once a minute to once in several days depending on the use case. For example, in a case of an application for regularly collecting data, even if the reception of data with a high frequency of transmission fails once, the data is immediately transmitted again. Therefore, the influence on the application is small.

On the other hand, if the reception of data with a low frequency of transmission fails, there is an interval before the next transmission of data. Therefore, there may be a situation in which the data is not updated for a long time. That is, the lower the frequency of transmission of data is, the longer the interval before the next reception of the data is. Therefore, the influence on the application may increase.

### <Allocation of Radio Resources According to Frequency of Transmission>

Therefore, in signal transmission of one-way communication, a radio resource according to the frequency of transmission of the data of the application is used to transmit a radio signal corresponding to the data. Note that the application may be any application. The application can be any application for regularly or irregularly repeating transfer of data from the terminal to the base station (that is, the application on the base station side collects data from the terminal for a plurality of times). In addition, the radio signal corresponding to the data denotes a radio signal including the content of the data. That is, the radio signal corresponding to the data is transmitted and received to transfer the data. In addition, the communication scheme can be an arbitrary scheme of one-way communication. For example, the communication scheme may be LPWA communication.

In addition, the frequency of transmission is an index representing the quantity of the number of transmissions of the radio signal repeated in a predetermined time unit. For example, the index may directly indicate the number of transmissions, such as the number of transmissions per unit time (for example, once per hour, n times per hour, or the like), or may indirectly indicate the number of transmissions, such as a transmission interval and a transmission cycle (for example, once a minute, once a day, or the like).

In addition, the radio resources are arbitrary. For example, the time (time slot) of transmission may vary in each frequency of transmission. In addition, for example, the frequency band (channel) of transmission may vary in each frequency of transmission. Furthermore, for example, the code used for the transmission may vary in each frequency of transmission. In addition, for example, the transmission power (Power) of the transmission may vary in each frequency of transmission. For example, the lower the frequency of transmission of data (the higher the priority of data) is, the larger the transmission power of the radio signal may be. Furthermore, a plurality of these parameters may be combined.

In this way, the terminal can autonomously select a radio resource to be used for the data transmission and use the radio resource to transmit the radio signal corresponding to the data to thereby suppress the probability of occurrence of a collision of radio signals corresponding to data with a low frequency of transmission. Therefore, the reception success rate of the data with a low frequency of transmission can be improved more than the data with a high frequency of transmission. This can suppress the period in which the application is affected. That is, the influence of the data transmission in one-way communication on the application can be suppressed. For example, even in an environment in which applications with different use cases coexist, the influence on the applications can be suppressed.

### <Communication Apparatus>

FIG. 1 is a block diagram illustrating a main configuration example of an embodiment of a communication apparatus according to the present technique. A communication apparatus 100 illustrated in FIG. 1 is an apparatus, such as a terminal of IoT, that transmits a radio signal to a base station (not illustrated).

The communication apparatus 100 may transmit any information, and for example, the communication apparatus 100 transmits, to the base station, data used in an application executed by an information processing apparatus (not illustrated) on the base station side (reception side). The communication apparatus 100 may generate the data, or the communication apparatus 100 may acquire data generated by an information processing apparatus other than the communication apparatus 100 and transmit the data. In an example described below, an application executed in the communication apparatus 100 generates data.

The data may include any content. For example, the data may include position, posture, velocity, acceleration, temperature, humidity, brightness, time, and the like. That is, the application on the base station side acquires predetermined data from the communication apparatus 100 and uses the data to execute an arbitrary process, such as, for example, generating statistical data.

The application of the communication apparatus 100 regularly or irregularly provides such data to the application on the base station side for a plurality of times. That is, the communication apparatus 100 transmits radio signals for a plurality of times. In addition, the communication apparatus 100 can execute a plurality of applications. The content of the data to be transmitted depends on each application. In addition, the frequency of transmission of data (the number of transmissions per unit time or transmission cycle) also depends on each application.

The communication apparatus 100 and the base station perform communication in only one direction (hereinafter, also referred to as one-way communication) from the communication apparatus 100 to the base station. Therefore, the communication apparatus 100 autonomously sets the radio resources to be used for transmitting radio signals. In setting the radio resources, the communication apparatus 100 allocates a different radio resource for each frequency of transmission of data. In other words, the communication apparatus 100 uses the radio resource corresponding to the frequency of transmission of data to transmit the radio signal corresponding to the data. Therefore, the communication apparatus 100 can suppress the influence of the data transmission in one-way communication on the application as described above.

As illustrated in FIG. 1, the communication apparatus 100 includes a control unit 101, a wireless communication unit 111 (antenna 111A), a radio resource determination unit 112, a radio resource data storage unit 113, and a transmission data providing unit 114. The processing units are connected to each other through a bus 110 and can be mutually transfer programs and data.

The control unit 101 executes a process regarding control of each processing unit (each block) in the communication apparatus 100, such as each processing unit from the wireless communication unit 111 to the transmission data providing unit 114. In addition, the control unit 101 uses data to be transmitted to generate a transmission frame. For example, the control unit 101 may include a CPU (Central Processing Unit) and a memory, and the CPU may use the memory to execute a program or process the data to thereby execute the process described above.

The wireless communication unit 111 executes a process regarding wireless communication according to the control of the control unit 101. For example, the wireless communication unit 111 includes components necessary for radio signal transmission, such as the antenna 111A and a transmission circuit, and transmits a radio signal according to a predetermined frame format. For example, the wireless communication unit 111 sets a transmission frame supplied from the control unit 101 as a radio signal and transmits the radio signal from the antenna 111A. Furthermore, in this case, the wireless communication unit 111 uses the radio resource set by the radio resource determination unit 112 to transmit the radio signal. That is, the wireless communication unit 111 functions as a transmission unit that performs signal transmission of one-way communication.

The radio resource determination unit 112 executes a process regarding setting of the radio resource used for the transmission of the radio signal corresponding to the data performed by the wireless communication unit 111 according to the control of the control unit 101. For example, the radio resource determination unit 112 sets the radio resource to be used according to the frequency of transmission of data. For example, the radio resource determination unit 112 sets the radio resource to be used based on information regarding the radio resource stored in the radio resource data storage unit 113. For example, the radio resource determination unit 112 acquires information regarding the frequency of transmission of data from the transmission data providing unit 114 and acquires information regarding the radio resource from the radio resource data storage unit 113 to set the radio resource to be used based on the information. For example, the radio resource determination unit 112 may include a CPU and a memory, and the CPU may use the memory to execute a program or process the data to thereby execute the process described above.

The radio resource data storage unit 113 includes an arbitrary storage medium, an input-output interface of the storage medium, and the like and stores information regarding the radio resources in the storage medium. The information regarding the radio resources may be any information. For example, the information may include information regarding allocation of radio resources for each preset frequency of transmission. In addition, according to the control of the control unit 101 or in response to a request from another processing unit, such as the radio resource determination unit 112, the radio resource data storage unit 113 supplies, to another processing unit such as the radio resource determination unit 112, all of the information regarding the radio resources stored in the storage medium or part of the information corresponding to the request.

That is, the radio resource data storage unit 113 functions as a radio resource storage unit that stores a correspondence between the frequency of transmission and the radio resource. The transmission unit uses the radio resource corresponding to the frequency of transmission of data obtained based on the correspondence read out from the radio resource storage unit to transmit the radio signal. By providing the radio resource storage unit, the radio resource determination unit 112 can more easily figure out the correspondence between the frequency of transmission and the radio resource. Therefore, the radio resource corresponding to the desirable frequency of data transmission can be more easily figured out.

The transmission data providing unit 114 executes a process regarding provision of data to be transmitted according to the control of the control unit 101. For example, the transmission data providing unit 114 executes the application described above to generate data or uses an external sensor to collect data. The transmission data providing unit 114 supplies it to the control unit 101 (or may be the wireless communication unit 111). In addition, the transmission data providing unit 114 supplies the information regarding the frequency of transmission of the data to the radio resource determination unit 112 according to the control of the control unit 101 or in response to the request of the radio resource determination unit 112 or the like. For example, the transmission data providing unit 114 may include a CPU and a memory, and the CPU may use the memory to execute the program or process the data to thereby execute the process described above. The communication apparatus 100 can include a plurality of transmission data providing units 114 to execute a plurality of applications.

### <Frame Format>

FIG. 2 illustrates an example of a frame format of the radio signal transmitted by the communication apparatus 100. As illustrated in FIG. 2, a transmission frame 130 includes a Preamble/Sync 131, a PHY header (PHY Header) 132, a MAC header (MAC Header) 133, a payload (Payload) 134, and a CRC (Cyclic Redundancy Check) 135.

The Preamble/Sync 131 is a predetermined fixed pattern. The Preamble/Sync 131 is used for detection of a signal and synchronization of a frame on the reception side.

The PHY header 132 is a part describing information regarding a physical frame. Examples of the information regarding the physical frame include the length of the part after the PHY header 132 (MAC header 133, payload 134, and CRC 135) and the modulation scheme. The reception side can receive the subsequent part according to the information of the PHY header 132.

The MAC header 133 describes address information of a sender and a recipient. In addition, the type of information described in the payload 134 and the like are described.

The payload 134 is transmission data. For example, data (for example, sensor output or the like) provided by the transmission data providing unit 114 is stored.

The CRC 135 is a cyclic redundancy check code and is information used on the reception side for the error detection of the frame.

### <Predetermined Correspondence>

The correspondence between the frequency of transmission and the radio resource may be predetermined, and the transmission unit described above may use the radio resource corresponding to the frequency of transmission of the transmission data in the predetermined correspondence to transmit the radio signal. The predetermined information can be used in this way to use the radio resource corresponding to the frequency of transmission to more easily transmit the data compared to the case in which the radio resource is allocated to the frequency of transmission every time the data is transmitted.

For example, as in a table 141 illustrated in FIG. 3, a different radio resource may be allocated in advance for each frequency of transmission. In the case of the table 141 illustrated in FIG. 3, time slots dividing the time axis are allocated as radio resources. The time slots are a plurality of time-sharing periods of a predetermined time period, and the periods are dedicated for the data transmission. In the case of the table 141, four time slots (time slot 1 to time slot 4) are provided for each minute. For example, 30 seconds are divided into four equal parts, and the length of each time slot is set to 7.5 seconds.

Furthermore, the time slots are allocated to different frequencies of transmission, and the transmission unit transmits the radio signal in the time slot corresponding to the frequency of transmission. For example, the time slot 1 is allocated to data with the frequency of transmission of once a minute. That is, the data with the frequency of transmission of once a minute is transmitted in the time slot 1. In addition, for example, the time slot 2 is allocated to data with the frequency of transmission of once an hour. That is, the data with the frequency of transmission of once an hour is transmitted in the time slot 2. Furthermore, for example, the time slot 3 is allocated to data with the frequency of transmission of once in twelve hours. That is, the data with the frequency of transmission of once in twelve hours is transmitted in the time slot 3. In addition, for example, the time slot 4 is allocated to data with the frequency of transmission of once a day. That is, the data with the frequency of transmission of once a day is transmitted in the time slot 4.

The time is different in each time slot (time slot 1 to time slot 4), and the data with each frequency of transmission is transmitted at different timing. Therefore, each communication apparatus 100 can transmit data according to the allocation to thereby suppress a collision with data with another frequency of transmission.

For example, in the case of time slots dividing 30 seconds into four equal parts, the proportion of the transmission terminals that transmit the data in the same time slot among the transmission terminals that transmit data at the frequency of transmission of once a minute is 50% as in a table 142 illustrated in FIG. 4. In addition, among the transmission terminals that transmit data at the frequency of transmission of once an hour, the proportion of the transmission terminals that transmit the data in the same time slot is 0.83%. Furthermore, among the transmission terminals that transmit data at the frequency of transmission of once in twelve hours, the proportion of the transmission terminals that transmit the data in the same time slot is 0.07%. In addition, among the transmission terminals that transmit data at the frequency of transmission of once a day, the proportion of the transmission terminals that transmit the data in the same time slot is 0.03%.

In this way, the lower the frequency of transmission of data is, the lower the probability of a collision with data of another transmission terminal is. That is, the reception success rate of data improves.

In this way, the reception success rate of data with a low frequency of transmission in which the application is affected for a longer period can be improved more than data with a high frequency of transmission. This can suppress the period in which the application is affected. That is, the influence on the application of the data transmission in one-way communication can be suppressed. For example, the influence on the application can also be suppressed in an environment in which applications for different use cases coexist.

### <Flow of Transmission Process>

An example of a flow of a transmission process executed by the communication apparatus 100 to transmit data will be described with reference to a flow chart of FIG. 5.

Once the transmission process is started, the radio resource determination unit 112 executes a radio resource allocation process to allocate a radio resource according to the importance of transmission data in step S101.

In step S102, the wireless communication unit 111 uses the radio resource allocated in step S101 to transmit the transmission data as a radio signal. Once the process of step S102 is finished, the transmission process ends.

### <Flow of Radio Resource Allocation Process>

Next, an example of a flow of the radio resource allocation process executed in step S101 of FIG. 5 will be described with reference to a flow chart of FIG. 6.

Once the radio resource allocation process is started, the radio resource determination unit 112 acquires information indicating the frequency of transmission of the transmission data from the transmission data providing unit 114 in step S111.

In step S112, the radio resource determination unit 112 allocates an available radio resource to the transmission data according to the frequency of data transmission acquired in step S111 based on the information regarding the radio resources stored in the radio resource data storage unit 113.

For example, the radio resource data storage unit 113 stores the information indicating the correspondence between the frequency of data transmission and the radio resource (time slot) as illustrated in the table 141 of FIG. 3, and the radio resource determination unit 112 allocates, to the transmission data, the radio resource (time slot) according to the frequency of data transmission acquired in step S111 based on the table 141. Once the process of step S112 is finished, the radio resource allocation process ends, and the process returns to FIG. 5.

The wireless communication unit 111 transmits the transmission data in the allocated radio resource (time slot) in step S102 of FIG. 5.

Each process is executed in this way, and the communication apparatus 100 can improve the reception success rate of the data with a low frequency of transmission more than the data with a high frequency of transmission and can suppress the influence on the application of the data transmission in one-way communication.

Note that although four time slots are provided every 30 seconds in the description above, the unit time (30 seconds in the example) for setting the time slots is arbitrary. In addition, the number of time slots set in the unit time is also arbitrary. Furthermore, the lengths of the time slots may not be uniform.

In addition, although the time slots are allocated to four types of frequencies of transmission in the description above, the number of types of frequencies of transmission provided with the time slots is arbitrary. In addition, the type of frequency of transmission is not limited to the examples of FIG. 3 and the like. For example, the time slots may be allocated to frequencies of transmission not included in the examples, such as once in 30 minutes, once in three hours, and once in two days.

In addition, for example, part of the time slots (part of the radio resources) may be used to transmit data transmitted in emergency or other data with priorities higher than the priorities of general data. That is, the transmission unit may use a dedicated radio resource to transmit a radio signal corresponding to urgent data and use another radio resource corresponding to the frequency of transmission to transmit a radio signal corresponding to data that is not urgent. In this way, the urgent data can be preferentially transmitted.

### <2. Second Embodiment>

### <Lower Frequent Use of Radio Resources>

In a case where the transmission timing of the radio signal coincides with a predetermined frequency of transmission lower than the frequency of transmission of data that is predetermined in the correspondence between the frequency of transmission of data and the radio resource and that corresponds to the radio signal, the transmission unit may use the time slot corresponding to the predetermined frequency of transmission to transmit the radio signal.

For example, a transmission terminal with a high frequency of transmission may also be able to transmit the data once an hour by using the same radio resource as a terminal with the frequency of transmission of once an hour.

This can suppress, for example, an increase in the influence on the application due to a failure in receiving data all the time because of an increase in the number of terminals that transmit data in the same time slot, caused by an increase in the number of terminals with high frequencies of transmission. That is, this can suppress the situation in which the data cannot be received at all.

A table 151 of FIG. 7 is a diagram illustrating an example of applications with different frequencies of data transmission and available time slots of each application (frequency of transmission). As illustrated in the table 151 of FIG. 7, an application 4 that transmits data at a frequency of once a minute uses a time slot 1 (TS1) to transmit the data at a frequency of once a minute. Similarly, the application 4 uses a time slot 2 (TS2) to transmit the data at a frequency of once an hour, uses a time slot 3 (TS3) to transmit the data at a frequency of once in twelve hours, and uses a time slot 4 (TS4) to transmit the data at a frequency of once a day.

In addition, an application 3 that transmits data at a frequency of once an hour uses the time slot 2 (TS2) to transmit the data at a frequency of once an hour. Similarly, the application 3 uses the time slot 3 (TS3) to transmit the data at a frequency of once in twelve hours and uses the time slot 4 (TS4) to transmit the data at a frequency of once a day.

Furthermore, an application 2 that transmits data at a frequency of once in twelve hours uses the time slot 3 (TS3) to transmit the data at a frequency of once in twelve hours. Similarly, the application 3 uses the time slot 4 (TS4) to transmit the data at a frequency of once a day.

In addition, an application 1 that transmits data at a frequency of once a day uses the time slot 4 (TS4) to transmit the data at a frequency of once a day.

### <Flow of Radio Resource Allocation Process>

An example of a flow of a radio resource allocation process executed in this case in step S101 of FIG. 5 will be described with reference to a flow chart of FIG. 8.

The radio resource determination unit 112 holds a plurality of timers and can use the timers to determine, for example, whether or not one day has passed since the transmission of data using a slot of once a day.

Once the radio resource allocation process is started, the radio resource determination unit 112 acquires the frequency of data transmission from the transmission data providing unit 114 in step S121 of FIG. 8.

In step S122, the radio resource determination unit 112 determines whether or not the frequency of data transmission acquired in step S121 is more than once a day. In a case where the radio resource determination unit 112 determines that the frequency of data transmission is more than once a day, the process proceeds to step S123.

In step S123, the radio resource determination unit 112 determines whether or not a timer that measures one day (hereinafter, referred to as timer (one day)) has expired. In a case where the radio resource determination unit 112 determines that the timer (one day) has expired (that is, one day has passed), the process proceeds to step S124.

In step S124, the radio resource determination unit 112 allocates the radio resource with the frequency of transmission of once a day to the transmission data based on the correspondence between the frequency of transmission and the radio resource stored in the radio resource data storage unit 113 and further sets the timer (one day) again. Once the process of step S124 is finished, the radio resource allocation process ends, and the process returns to FIG. 5.

Furthermore, in a case where the radio resource determination unit 112 determines that the frequency of data transmission is not more than once a day in step S122, the process proceeds to step S125. Furthermore, in a case where the radio resource determination unit 112 determines that the timer (one day) has not expired (one day has not passed) in step S123, the process proceeds to step S125.

In step S125, the radio resource determination unit 112 determines whether or not the frequency of data transmission acquired in step S121 is more than once in twelve hours. In a case where the radio resource determination unit 112 determines that the frequency of data transmission is more than once in twelve hours, the process proceeds to step S126.

In step S126, the radio resource determination unit 112 determines whether or not a timer that measures twelve hours (hereinafter, referred to as timer (twelve hours)) has expired. In a case where the radio resource determination unit 112 determines that the timer (twelve hours) has expired (that is, twelve hours have passed), the process proceeds to step S127.

In step S127, the radio resource determination unit 112 allocates the radio resource with the frequency of transmission of once in twelve hours to the transmission data based on the correspondence between the frequency of transmission and the radio resource stored in the radio resource data storage unit 113 and further sets the timer (twelve hours) again. Once the process of step S127 is finished, the radio resource allocation process ends, and the process returns to FIG. 5.

Furthermore, in a case where the radio resource determination unit 112 determines that the frequency of data transmission is not more than once in twelve hours in step S125, the process proceeds to step S128. Furthermore, in a case where the radio resource determination unit 112 determines that the timer (twelve hours) has not expired (twelve hours have not passed) in step S126, the process proceeds to step S128.

In step S128, the radio resource determination unit 112 determines whether or not the frequency of data transmission acquired in step S121 is more than once an hour. In a case where the radio resource determination unit 112 determines that the frequency of data transmission is more than once an hour, the process proceeds to step S129.

In step S129, the radio resource determination unit 112 determines whether or not a timer that measures one hour (hereinafter, referred to as timer (one hour)) has expired. In a case where the radio resource determination unit 112 determines that the timer (one hour) has expired (that is, one hour has passed), the process proceeds to step S130.

In step S130, the radio resource determination unit 112 allocates the radio resource with the frequency of transmission of once an hour to the transmission data based on the correspondence between the frequency of transmission and the radio resource stored in the radio resource data storage unit 113 and further sets the timer (one hour) again. Once the process of step S130 is finished, the radio resource allocation process ends, and the process returns to FIG. 5.

Furthermore, in a case where the radio resource determination unit 112 determines that the frequency of data transmission is not more than once an hour in step S128, the process proceeds to step S131. Furthermore, in a case where the radio resource determination unit 112 determines that the timer (one hour) has not expired (one hour has not passed) in step S129, the process proceeds to step S131.

In step S131, the radio resource determination unit 112 allocates an available radio resource to the transmission data according to the frequency of data transmission based on the correspondence between the frequency of transmission and the radio resource stored in the radio resource data storage unit 113. Once the process of step S131 is finished, the radio resource allocation process ends, and the process returns to FIG. 5.

The wireless communication unit 111 uses the radio resource (time slot) allocated in this way to transmit the transmission data in step S102 of FIG. 5.

Each process can be executed in this way to transmit data with a high frequency of transmission by using, at a certain interval, a radio resource with a small number of transmission terminals (number of applications) that use the same radio resource to transmit data. Therefore, the situation that the data cannot be received at all can be suppressed, and the influence on the application can be reduced. Although the time slots are used as an example of the radio resources in the description of the first and second embodiments, the radio resources are arbitrary as described above, and the radio resources are not limited to the example. For example, a frequency channel may be allocated according to the frequency of transmission.

### <3. Third Embodiment>

### <Use of Frequency Band>

In addition, the radio resources may be a combination of a plurality of types of parameters as described above. For example, the radio resources may further include frequency channels dividing the frequency axis, and the transmission unit may transmit the radio signal in the time slot and the frequency channel according to the frequency of transmission. By providing a plurality of parameters regarding the radio resources in this way, the number of radio resources can be easily increased.

The frequency channel (also referred to as channel) is a frequency band dedicated for data transmission. An arbitrary number of frequency channels can be set on the frequency axis. The bands of the frequency channels are arbitrary as long as the bands are different from each other. For example, the bandwidth of each frequency channel is arbitrary, and the bandwidths of all frequency channels may be integrated or may not be integrated. In addition, the bands of the frequency channels may be continuous or may not be continuous.

For example, in a case of radio resources 161 illustrated in FIG. 9, one minute is set as one cycle in the time axis direction (horizontal direction in FIG. 9), and one cycle is divided into four parts to set four time slots (time slot 1 to time slot 4) for each minute. In addition, four frequency channels (Ch.1 to Ch.4) are set in the frequency axis direction (vertical direction in FIG. 9). Therefore, in other words, 4×4 (sixteen) radio resources are set.

In general, the larger the number of radio resources is, the more the transmission timing can be dispersed. Therefore, a collision can be suppressed. To increase the number of radio resources using time slots, the number of time slots per unit time needs to be increased, or the unit time needs to be increased. In the former case, one time slot becomes short, and there is a limit in preventing an obstacle in the signal transmission. In the latter case, one cycle becomes long, and the maximum number of frequencies of transmission may be reduced.

On the other hand, the frequency channels can be used as described above to increase the number of radio resources without changing the time slots.

Note that the allocation of each radio resource in this case may be performed in any way. For example, in each time slot, the frequency channel to be used may be changed every time the data is transmitted. Furthermore, when a terminal with a high frequency of transmission transmits the data by using, at a certain interval, a radio resource selected by a terminal with the frequency of transmission lower than that of the terminal, available radio resources may be limited.

For example, the frequency channels that can be used by the terminal with a high frequency of transmission to transmit the data at a certain interval by using the time slot selected by the terminal with the frequency of transmission lower than that of the terminal may be limited to predetermined frequency channels. That is, in the case where the transmission timing of the radio signal coincides with the predetermined frequency of transmission lower than the frequency of transmission of data that is predetermined in the correspondence between the frequency of transmission and the radio resource and that corresponds to the radio signal, the transmission unit may use the preset predetermined channel of the time slot corresponding to the predetermined frequency of transmission to transmit the radio signal.

For example, in a case of an example illustrated in a table 162 of FIG. 10, a different time slot is allocated to each frequency of transmission. Furthermore, in each time slot, the frequency channel to be used is updated in a loop every time the data is transmitted (for example, the loop advances in order of Ch.1, Ch.2, Ch.3, and Ch.4 and then returns to Ch.1). Furthermore, in a case where data with the frequency of transmission higher than the frequency of transmission allocated to a time slot is to be transmitted in the time slot, the data is transmitted in Ch.1 (predetermined frequency channel).

In this way, in the case where the data with the frequency of transmission higher than the frequency of transmission corresponding to the time slot is to be transmitted in the time slot, the influence on the data transmitted at the frequency of transmission corresponding to the time slot can be suppressed.

For example, in a case of a terminal that transmits data once an hour, the reception success rate of the data may be reduced because the terminal uses, once in four hours, the radio resource in which a terminal with the frequency of transmission of once a minute joins. However, the terminal uses, three times in four hours, the radio resource in which there is only a terminal with the frequency of transmission of once an hour. Therefore, the reduction in the reception success rate of the data can be suppressed.

### <Flow of Radio Resource Allocation Process>

An example of a flow of the radio resource allocation process in this case executed in step S101 of FIG. 5 will be described with reference to a flow chart of FIG. 11.

As in the case of FIG. 8, the radio resource determination unit 112 holds a plurality of timers and can use the timers to determine, for example, whether or not one day has passed since the transmission of data using a slot of once a day.

However, in the case of the present embodiment, the radio resources include the time axis and the frequency axis. In the example of FIG. 9, there are four time slots on the time axis and four frequency channels on the frequency axis. Furthermore, in the example of FIG. 10, only Ch.1 can be selected in the frequency axis when the terminal with the frequency of transmission of once a minute uses the time slot 2 only once an hour to transmit the data.

Once the radio resource allocation process is started, the radio resource determination unit 112 acquires the frequency of data transmission from the transmission data providing unit 114 in step S141 of FIG. 11.

In step S142, the radio resource determination unit 112 determines whether or not the frequency of data transmission acquired in step S141 is more than once a day. In a case where the radio resource determination unit 112 determines that the frequency of data transmission is more than once a day, the process proceeds to step S143.

In step S143, the radio resource determination unit 112 determines whether or not the timer (one day) has expired. In a case where the radio resource determination unit 112 determines that the timer (one day) has expired (that is, one day has passed), the process proceeds to step S144.

In step S144, the radio resource determination unit 112 allocates available radio resources among the radio resources allocated to the frequency of transmission of once a day to the transmission data based on the correspondence between the frequency of transmission and the radio resource stored in the radio resource data storage unit 113 and further sets the timer (one day) again. In the case of the example illustrated in the table 162 of FIG. 10, the time slot 4 on the time axis and Ch.1 on the frequency axis are selected as available radio resources. Once the process of step S144 is finished, the radio resource allocation process ends, and the process returns to FIG. 5.

Furthermore, in a case where the radio resource determination unit 112 determines that the frequency of data transmission is not more than once a day in step S142, the process proceeds to step S145. Furthermore, in a case where the radio resource determination unit 112 determines that the timer (one day) has not expired (one day has not passed) in step S143, the process proceeds to step S145.

In step S145, the radio resource determination unit 112 determines whether or not the frequency of data transmission acquired in step S141 is more than once in twelve hours. In a case where the radio resource determination unit 112 determines that the frequency of data transmission is more than once in twelve hours, the process proceeds to step S146.

In step S146, the radio resource determination unit 112 determines whether or not the timer (twelve hours) has expired. In a case where the radio resource determination unit 112 determines that the timer (twelve hours) has expired (that is, twelve hours have passed), the process proceeds to step S147.

In step S147, the radio resource determination unit 112 allocates the radio resources with the frequency of transmission of once in twelve hours to the transmission data based on the correspondence between the frequency of transmission and the radio resource stored in the radio resource data storage unit 113 and further sets the timer (twelve hours) again. In the case of the example illustrated in the table 162 of FIG. 10, the time slot 3 on the time axis and Ch.1 on the frequency axis are selected as available radio resources. Once the process of step S147 is finished, the radio resource allocation process ends, and the process returns to FIG. 5.

Furthermore, in a case where the radio resource determination unit 112 determines that the frequency of data transmission is not more than once in twelve hours in step S145, the process proceeds to step S148. Furthermore, in a case where the radio resource determination unit 112 determines that the timer (twelve hours) has not expired (twelve hours have not passed) in step S146, the process proceeds to step S148.

In step S148, the radio resource determination unit 112 determines whether or not the frequency of data transmission acquired in step S141 is more than once an hour. In a case where the radio resource determination unit 112 determines that the frequency of data transmission is more than once an hour, the process proceeds to step S149.

In step S149, the radio resource determination unit 112 determines whether or not the timer (one hour) has expired. In a case where the radio resource determination unit 112 determines that the timer (one hour) has expired (that is, one hour has passed), the process proceeds to step S150.

In step S150, the radio resource determination unit 112 allocates the radio resources with the frequency of transmission of once an hour to the transmission data based on the correspondence between the frequency of transmission and the radio resource stored in the radio resource data storage unit 113 and further sets the timer (one hour) again. In the case of the example illustrated in the table 162 of FIG. 10, the time slot 2 on the time axis and Ch.1 on the frequency axis are selected as available radio resources. Once the process of step S150 is finished, the radio resource allocation process ends, and the process returns to FIG. 5.

Furthermore, in a case where the radio resource determination unit 112 determines that the frequency of data transmission is not more than once an hour in step S148, the process proceeds to step S151. In addition, in a case where the radio resource determination unit 112 determines that the timer (one hour) has not expired (one hour has not passed) in step S149, the process proceeds to step S151.

In step S151, the radio resource determination unit 112 allocates available radio resources to the transmission data according to the frequency of data transmission based on the correspondence between the frequency of transmission and the radio resource stored in the radio resource data storage unit 113. In the case of the example illustrated in the table 162 of FIG. 10, the time slot 1 on the time axis and Ch.1 to Ch.4 on the frequency axis are selected as available radio resources.

There are a plurality of available radio resources (frequency axis), and therefore, the radio resource determination unit 112 further narrows down the radio resources to be used. For example, the radio resource determination unit 112 adds 1 to the frequency channel of the transmission of the last time and uses the frequency channel in step S152. Note that in a case where the channel exceeds the maximum number of channels, the channel returns to Ch.1.

Once the process of step S152 is finished, the radio resource allocation process ends, and the process returns to FIG. 5. The wireless communication unit 111 uses the radio resource (time slot) allocated in this way to transmit the transmission data in step S102 of FIG. 5.

Each process can be executed in this way, and in the case where the data with the frequency of transmission higher than the frequency of transmission corresponding to the time slot is to be transmitted in the time slot, the influence on the data transmitted at the frequency of transmission corresponding to the time slot can be suppressed.

Note that in the description above, although all of the channels are cyclically used in the case where the data with the frequency of transmission corresponding to a time slot is transmitted in the time slot, part of the frequency channels may not be used to transmit the data with the frequency of transmission corresponding to the time slot.

For example, the part of the frequency channels may be used to transmit data transmitted at a frequency of transmission higher than the frequency of transmission corresponding to the time slot. As a result, in the case where the data with the frequency of transmission higher than the frequency of transmission corresponding to the time slot is to be transmitted in the time slot, the influence on the data transmitted at the frequency of transmission corresponding to the time slot can be further suppressed.

In addition, for example, the part of the frequency channels may be used to transmit data transmitted in emergency or other data with priorities higher than the priorities of general data. In this way, urgent data can be preferentially transmitted. Note that although the example of the combination of the time slot and the frequency channel is described above, the combination of parameters is arbitrary, and the combination is not limited to the example. For example, a combination of the time slot and the code or a combination of the frequency channel and the code may be used. In addition, for example, three or more types of parameters, such as the time slot, the frequency channel, and the code, may be combined.

### <4. Fourth Embodiment>

### <Lower Frequent Radio Resources Selectable>

Although the example of the proportion of the transmission terminals at each frequency of transmission is illustrated in the first embodiment (FIG. 4 and the like), the example is not limited to this. For example, the proportion of the transmission terminals at each frequency of transmission may dynamically change.

For example, the transmission terminals at each frequency of transmission with the proportion as in the table 142 of FIG. 4 at a certain time may be changed to the proportion as in a table 171 illustrated in FIG. 12 at another time.

In the case where the proportion changes in this way, the communication apparatus 100 may be able to autonomously select a radio resource with more space. For example, in the case of the table 171 of FIG. 12, the proportion of the terminals with the frequency of transmission of once a minute is 50%. If only the time slot 1 is used to transmit data in this case, the reception success rate of the data transmitted at the frequency of transmission of once a minute may be significantly reduced. Therefore, the time slot with more space among the time slots 2 to 4 may be searched to transmit the data.

That is, the transmission unit may transmit the radio signal by using a radio resource corresponding to any one of the frequency of transmission of the data or the frequency of transmission lower than the frequency of transmission of the data in the correspondence between the frequency of transmission and the radio resource. In this way, the data can be transmitted in a wider variety of radio resources, and this can suppress a situation that the data transmission is unbalanced towards part of the radio resources. Therefore, a collision of data can be suppressed, and the influence on the application of data transmission in one-way communication can be suppressed.

Note that the transmission unit may select the radio resource to be used for transmitting the radio signal according to the status of use of the radio resource. For example, in a case where the use rate (degree of congestion) of a radio resource is higher than a predetermined criterion (threshold), another radio resource may be selected.

The method of detecting whether or not there is more space in the time slot is arbitrary. For example, carrier sense or packet detection may be used. In general, the laws, communication scheme standards, and the like often suggest that a terminal perform carrier sense or packet detection before transmitting data in order to suppress excessive collisions during data transmission. The carrier sense is a scheme in which the data can be transmitted only in a case where the power received for a certain time is equal to or lower than a certain level. The packet detection is a scheme in which a known preamble is used, and the data can be detected only in a case where a value of correlation with the preamble is equal to or lower than a certain level.

For example, the transmission unit may select a radio resource in which the value of correlation with the known preamble obtained by the packet detection is lower than a predetermined threshold. For example, as in a table 172 of FIG. 13, a basic time slot mainly used for the data transmission and an available time slot may be allocated to each frequency of transmission, and a threshold (Packet Detection) as a condition of selection may be further provided to each available time slot. Furthermore, the value of the threshold may be smaller for a radio resource corresponding to a lower frequency of transmission in the correspondence between the frequency of transmission and the radio resource.

For example, in the case of the table 172, a time slot corresponding to any one of the frequency of transmission or a frequency of transmission lower than the frequency of transmission is set as an available time slot. In addition, a smaller value is set for the threshold allocated to a time slot with a lower frequency of transmission. For example, time slots 1 to 4 are allocated as available time slots to the frequency of transmission of once a minute. As for the thresholds, the threshold of the time slot 4 is set to -20 dB, the threshold of the time slot 3 is set to -15 dB, the threshold of the time slot 2 is set to -10 dB, and the threshold of the time slot 1 is set to -5 dB. As a result, a time slot with a high frequency of transmission can be easily selected.

In this way, a different radio resource can be basically used for each frequency of data transmission to thereby increase the data reception success rate of a terminal with a low frequency of data transmission to reduce the influence on the application. On the other hand, in the case where the proportion of terminals with high frequencies of transmission increases, a radio resource selected by a terminal with a frequency of transmission lower than that of the terminal can be selected while lowering the packet detection threshold. In this way, the radio resource can be used to transmit the data only when there is more space in the radio resource selected by the terminal with a low frequency of transmission, and the state that the reception of data always fails can be avoided. That is, the influence on the application can be reduced in a wider variety of situations.

### <Flow of Radio Resource Allocation Process>

An example of a flow of the radio resource allocation process executed in this case in step S101 of FIG. 5 will be described with reference to a flow chart of FIG. 14.

Once the radio resource allocation process is started, the radio resource determination unit 112 acquires the frequency of data transmission from the transmission data providing unit 114 in step S161 of FIG. 14.

In step S162, the radio resource determination unit 112 allocates the radio resource to be basically used (in the case of the example of FIG. 13, basic time slot) to the transmission data. For example, when the frequency of transmission of the terminal is once a minute in the case of FIG. 13, the time slot 1 is selected in the process.

In step S163, the radio resource determination unit 112 acquires the packet detection threshold (in the case of the example of FIG. 13, Packet Detection) of the case where the allocated radio resource is to be used. In the case of the example of FIG. 13, -5 dB is acquired as the packet detection threshold of the time slot 1.

In step S164, the radio resource determination unit 112 executes the packet detection process and further determines whether or not the correlation value of the preamble obtained in the packet detection process is lower than the packet detection threshold acquired in step S163. In a case where the radio resource determination unit 112 determines that the correlation value of the preamble is not lower than the packet detection threshold, the radio resource cannot be used to transmit the data, and the process proceeds to step S165.

In step S165, the radio resource determination unit 112 searches for available radio resources based on the radio resource data stored in the radio resource data storage unit 113 and determines whether or not there are other available radio resources. In a case where the radio resource determination unit 112 determines that there are other available radio resources, the process proceeds to step S166.

In step S166, the radio resource determination unit 112 selects the next radio resource from the other available radio resources and acquires the packet detection threshold in the case of using the next radio resource. In the case where the frequency of transmission of the transmission terminal is once a minute, -10 dB is acquired as the packet detection threshold in the process according to the table 172 illustrated in FIG. 13 in the case where, for example, the time slot 2 is to be used. That is, the packet detection threshold is set lower than that of the case in which the terminal with the frequency of transmission of once an hour uses the same radio resource. Therefore, in a case where the terminal with the frequency of transmission of once an hour uses the same radio resource at the same time, the terminal with the frequency of transmission of once an hour can preferentially use the radio resource. Once the process of step S166 is finished, the process returns to step S164, and the subsequent process is repeated for the next radio resource.

Note that in a case where the radio resource determination unit 112 determines that the correlation value of the preamble is lower than the packet detection threshold in step S164, the radio resource allocation process ends, and the process returns to FIG. 5. The wireless communication unit 111 uses the radio resource (time slot) allocated in this way to transmit the transmission data in step S102 of FIG. 5.

Furthermore, in a case where the radio resource determination unit 112 determines that there are no other radio resources in step S165, the radio resource allocation process ends, and the transmission process is also forced to end.

Each process can be executed in this way to increase the data reception success rate of the terminal with a low frequency of data transmission, and the influence on the application can be reduced.

Note that the methods described in the first to fourth embodiments may be appropriately combined.

### <5. Fifth Embodiment>

### <Transmission at Minimum Frequency of Collection>

For example, there may be a case where the frequency of transmission of the transmission terminal and the minimum frequency of data collection of the application on the reception side are different, such as a case in which although the transmission terminal transmits data once a minute, there is no problem if the application on the reception side can collect the data at least once in ten minutes.

Therefore, in the case where the frequency of transmission of the transmission terminal and the minimum frequency of data collection of the application on the reception side are different, the radio signal may be transmitted not only at the frequency of transmission, but also at the minimum frequency of collection of data.

For example, the transmission unit may further transmit the radio signal corresponding to the data at timing according to the minimum frequency of collection of data of the application on the radio signal reception side. In this way, the data at the minimum frequency of collection can be more surely provided. Therefore, the influence on the application of the data transmission in one-way communication can be suppressed.

### <Communication Apparatus>

FIG. 15 is a block diagram illustrating a main configuration example of the communication apparatus in this case. A communication apparatus 200 illustrated in FIG. 15 is an apparatus basically similar to the communication apparatus 100. The communication apparatus 200 includes similar components and executes similar processes. However, the communication apparatus 200 further includes an application information storage unit 211 in addition to the components of the communication apparatus 100.

The application information storage unit 211 includes an arbitrary storage medium, an input-output interface of the storage medium, and the like and stores, in the storage medium, application information that is information regarding the application. The application information may be any information. For example, the application information may be information regarding the minimum frequency of data collection of the application on the reception side corresponding to the application. In addition, according to the control of the control unit 101 or in response to a request from another processing unit, such as the radio resource determination unit 112, the application information storage unit 211 supplies, to another processing unit such as the radio resource determination unit 112, all of the application information stored in the storage medium or part of the information corresponding to the request.

That is, the application information storage unit 211 functions as an application information storage unit that stores the minimum frequency of collection of data of the application on the reception side. The radio resource determination unit 112 sets, separately from the normal case, a radio resource to be used in the case where the transmission unit transmits the radio signal at the timing corresponding to the minimum frequency of collection stored in the application information storage unit 211. That is, the radio resource determination unit 112 uses the correspondence between the frequency of data transmission and the radio resource read out from the radio resource data storage unit 113 to select the radio resource corresponding to the same frequency of data transmission as the minimum frequency of collection of data of the application on the reception side (that is, the radio resource corresponding to the minimum frequency of collection).

In the case where the wireless communication unit 111 (transmission unit) transmits the radio signal at the timing corresponding to the minimum frequency of collection, the wireless communication unit 111 uses the radio resource corresponding to the minimum frequency of collection selected as described above. That is, in the case where the wireless communication unit 111 transmits the radio signal at the timing corresponding to the minimum frequency of collection, the wireless communication unit 111 can use a radio resource different from the normal case (case in which the radio signal is transmitted at other timing). Therefore, the data at the minimum frequency of collection can be more surely provided. Therefore, the influence on the application of the data transmission in one-way communication can be suppressed. Note that by providing the application information storage unit 211, the radio resource determination unit 112 can more easily figure out the minimum frequency of collection of data of the application on the reception side.

For example, it is assumed that the correspondence between the frequency of transmission of data and the radio resource is set as in a table 231 of FIG. 16.

In this case, the data is transmitted as in, for example, a table 232 of FIG. 17. For example, according to the table 232, the frequency of transmission of a transmission terminal with a transmission terminal ID of 000 is once a minute, and the transmission terminal usually uses the time slot 1 to transmit the radio signal based on the table 231. In addition, according to the table 232, the minimum frequency of data collection of the application on the reception side that uses the data provided by the transmission terminal is once in ten minutes. Therefore, the transmission terminal uses the time slot 2 to transmit the radio signal only once in ten minutes based on the table 231.

In addition, for example, according to the table 232, the frequency of transmission of a transmission terminal with a transmission terminal ID of 001 is once a minute, and the transmission terminal usually uses the time slot 1 to transmit the radio signal based on the table 231. In addition, according to the table 232, the minimum frequency of data collection of the application on the reception side that uses the data provided by the transmission terminals is once an hour. Therefore, the transmission terminal uses the time slot 4 to transmit the radio signal only once an hour based on the table 231.

Furthermore, for example, according to the table 232, the frequency of transmission of a transmission terminal with a transmission terminal ID of 002 is once in ten minutes, and the transmission terminal usually uses the time slot 2 to transmit the radio signal based on the table 231. In addition, according to the table 232, the minimum frequency of data collection of the application on the reception side that uses the data provided by the transmission terminal is once in 30 minutes. Therefore, the transmission terminal uses the time slot 3 to transmit the radio signal only once in 30 minutes based on the table 231.

In this way, the terminal with a high frequency of transmission of data usually transmits the data by using a radio resource with a large number of terminals that transmit data at the same time, and the terminal transmits the data at the interval of the minimum frequency of data collection of the application by using a radio resource with a small number of terminals that transmit data at the same time. This can improve the reception success rate of the data and reduce the influence on the application.

### <Flow of Radio Resource Allocation Process>

An example of a flow of the radio resource allocation process in this case executed in step S101 of FIG. 5 will be described with reference to a flow chart of FIG. 18.

Once the radio resource allocation process is started, the radio resource determination unit 112 acquires the frequency of data transmission from the transmission data providing unit 114 in step S181 of FIG. 18.

In step S182, the radio resource determination unit 112 acquires the minimum frequency of data collection of the application from the application information storage unit 211.

In step S183, the radio resource determination unit 112 determines whether or not the timer with the frequency of collection of the application has expired. In a case where the radio resource determination unit 112 determines that the timer has not expired, the process proceeds to step S184.

In step S184, the radio resource determination unit 112 allocates an available radio resource to the transmission data according to the frequency of data transmission based on the radio resource data stored in the radio resource data storage unit 113.

Once the process of step S184 is finished, the radio resource allocation process ends, and the process returns to FIG. 5. The wireless communication unit 111 uses the radio resource (time slot) allocated in this way to transmit the transmission data in step S102 of FIG. 5.

Furthermore, in a case where the radio resource determination unit 112 determines that the timer with the frequency of collection of the application has expired in step S183, the process proceeds to step S185. In step S185, the radio resource determination unit 112 allocates an available radio resource to the transmission data according to the minimum frequency of data collection of the application based on the radio resource data stored in the radio resource data storage unit 113.

In step S186, the radio resource determination unit 112 sets again the timer with the frequency of collection of the application.

Once the process of step S186 is finished, the radio resource allocation process ends, and the process returns to FIG. 5. The wireless communication unit 111 uses the radio resource (time slot) allocated in this way to transmit the transmission data in step S102 of FIG. 5.

Each process can be executed in this way to improve the data reception success rate and reduce the influence on the application.

Note that the method described in the present embodiment may be appropriately used in combination with each of the methods described in the first to fourth embodiments.

### <6. Sixth Embodiment>

### <Radio Resource Allocation According to Elapsed Time>

For example, there may be a use case in which the transmission terminal collects the data once a minute, but the transmission terminal does not transmit the data if the value is not changed from the time that the data is collected last time. In this way, the frequency of data transmission of the transmission terminal may be changed.

In this case, the transmission unit may transmit the radio signal by using a radio resource according to the frequency of transmission corresponding to the length of elapsed time from the last transmission.

For example, as illustrated in FIG. 19, it is assumed that the transmission terminal collects data once a minute from a sensor or the like and transmits the data only in a case where the data value is different from the last time. Furthermore, it is assumed that the correspondence between the frequency of transmission of data and the radio resource is defined as in the table 231 of FIG. 16. As in the example on the left side of FIG. 19, each data is transmitted when the data value of the collected data changes every time. That is, the interval from the last data transmission is one minute. Therefore, the frequency of transmission is once a minute, and the time slot 1 is acquired based on the table 231. On the other hand, as in the example on the right side of FIG. 19, the data before the change (data in which the data value is the same as the last time) is not transmitted when the collected data value changes after ten minutes. That is, the interval from the last data transmission is ten minutes. Therefore, the frequency of transmission is once in ten minutes, and the time slot 2 is acquired based on the table 231.

In this way, the radio resource to be used for the data transmission can be changed in accordance with the frequency of data transmission of the terminal, and the influence on the application can be maintained at a low level.

### <Flow of Radio Resource Allocation Process>

An example of a flow of the radio resource allocation process executed in this case in step S101 of FIG. 5 will be described with reference to a flow chart of FIG. 20.

Once the radio resource allocation process is started, the radio resource determination unit 112 acquires how many minutes have passed since the data is transmitted last time in step S191 of FIG. 20.

In step S192, the radio resource determination unit 112 acquires an available radio resource according to the elapsed time. That is, the radio resource determination unit 112 allocates the radio resource according to the elapsed time (frequency of transmission estimated from the elapsed time) to the data transmission.

Once the process of step S192 is finished, the radio resource allocation process ends, and the process returns to FIG. 5. The wireless communication unit 111 uses the radio resource (time slot) allocated in this way to transmit the transmission data in step S102 of FIG. 5. That is, the wireless communication unit 111 transmits the radio signal by using the radio resource according to the frequency of transmission corresponding to the length of the elapsed time from the last transmission.

Each process can be executed in this way to improve the data reception success rate and reduce the influence on the application.

Note that the method described in the present embodiment may be appropriately used in combination with each of the methods described in the first to fifth embodiments.

### <7. Seventh Embodiment>

### <Repetition for the Number of Times According to Frequency of Transmission>

The transmission terminal (communication apparatus 100 and communication apparatus 200) may repeatedly transmit the same data. In that case, the transmission unit may repeatedly transmit the radio signal for the number of times according to the frequency of transmission of the data corresponding to the radio signal. For example, the lower the frequency of transmission of data is, the larger the number of transmissions of the radio signal repeated by the transmission unit may be.

In the case where the same data is repeatedly transmitted, the reception success rate is improved by increasing the number of repeated transmissions. Therefore, for example, a terminal with a low frequency of transmission of data may be allowed to select more radio resources that can be used. In this way, the number of repeated transmissions may be increased to raise the reception success rate of data.

For example, as in a table 261 illustrated in FIG. 21, the correspondence between the frequency of transmission and the number of available time slots (that is, the maximum number of repetitions of data transmission) may be set. In addition, for example, the correspondence may be predetermined. Furthermore, for example, the radio resource data storage unit 113 may store the correspondence as radio resource data.

For example, assuming that the frequency of transmission of a transmission terminal A is once a minute as in a table 262 illustrated in A of FIG. 22, 1 is set as the number of radio resources that can be used based on the table 261 of FIG. 21. On the other hand, assuming that the frequency of transmission of a transmission terminal B is once a day as in the table 262 illustrated in B of FIG. 22, 10 is set as the number of radio resources that can be used based on the table 261 of FIG. 21.

In this case, as illustrated in B of FIG. 22, the transmission terminal A uses one time slot to transmit the same data only once (in FIG. 22, a pattern with diagonal lines from upper left to lower right). On the other hand, the transmission terminal B uses ten time slots to transmit the same data ten times (in FIG. 22, a pattern with diagonal lines from lower left to upper right). In this way, the transmission of data with a low frequency of transmission can be repeated to improve the reception success rate of the data with a low frequency of transmission, and the influence on the application of the data transmission in one-way communication can be suppressed.

### <Flow of Transmission Process>

An example of a flow of the transmission process in this case will be described with reference to a flow chart of FIG. 23. Once the transmission process is started, the radio resource determination unit 112 executes a radio resource allocation process to allocate a radio resource according to the frequency of transmission of the transmission data.

In step S202, the wireless communication unit 111 uses the radio resource allocated in the process of step S201 to repeatedly transmit the same transmission data.

Once the process of step S202 is finished, the transmission process ends.

### <Flow of Radio Resource Allocation Process>

Next, an example of a flow of the radio resource allocation process executed in step S201 of FIG. 23 will be described with reference to a flow chart of FIG. 24.

Once the radio resource allocation process is started, the radio resource determination unit 112 acquires the frequency of transmission of data from the transmission data providing unit 114 or the like in step S211.

In step S212, the radio resource determination unit 112 obtains the number of available radio resources corresponding to the frequency of transmission acquired in step S211 based on the radio resource data stored in the radio resource data storage unit 113 and allocates the number of available radio resources to the transmission data. That is, the number of repetitions of the transmission of the transmission data is set.

Once the process of step S212 is finished, the radio resource allocation process ends, and the process returns to FIG. 23. The wireless communication unit 111 repeats the transmission of the transmission data for the number of times equivalent to the number of repetitions allocated in this way in step S202 of FIG. 23.

Each process can be executed in this way to repeat the transmission of data with a low frequency of transmission, and the reception success rate of the data with a low frequency of transmission can be improved. Therefore, the influence on the application of the data transmission in one-way communication can be suppressed.

Note that the method described in the present embodiment may be appropriately used in combination with each of the methods described in the first to sixth embodiments.

### <8. Eighth Embodiment>

### <Communication System>

The present technique can also be applied to any communication scheme as long as the communication is one-way communication. For example, the present technique can also be applied to LPWA (Low Power Wide Area) communication.

The LPWA communication is wireless communication that can transfer information in a wide range of approximately several dozen to 100 km with low power consumption, and the use in IoT (Internet of Things) and the like for transferring a small amount of information, such as sensor information, is becoming more prevalent.

Various schemes are considered for the communication scheme of the LPWA communication. For example, there can be a communication scheme for transmitting and receiving (transferring) radio signals in a 920 MHz band. It can be stated that the new communication scheme is a type of wireless communication in the 920 MHz band.

In Japan, the 920 MHz band is a frequency band approved by the Ministry of Internal Affairs and Communications from July 2011, and anyone can use the 920 MHz band without license. However, the maximum continuous transmission time of the wireless communication in the 920 MHz band is limited to four seconds by a standard (ARIB (Association of Radio Industries and Business) STD T-108). In addition, the continuous transmission time of the wireless communication can be shortened to, for example, equal to or less than 0.4 seconds to reduce the influence of interference on another wireless system that uses the same frequency band. Therefore, the ARIB standard of the 920 MHz band sets the continuous transmission time to equal to or less than 0.4 seconds to allocate more channels. As a result, the continuous transmission time can be set to equal to or less than 0.4 seconds in Japan to transmit and receive signals in a low interference state. In addition, the continuous transmission time can be further reduced to equal to or less than 0.2 seconds to shorten the stop time to retransmit the signals.

To improve the S/N ratio (Signal to Noise ratio) of the reception signal on the reception side in the new communication scheme using the 920 MHz band, the same packet is transferred for a plurality of times, for example.

FIG. 25 is a diagram illustrating an example in which the same packet is transferred for a plurality of times in the new communication scheme.

In FIG. 25, a super frame (Super Frame) of one minute is set, and the same packet is transmitted ten times during the super frame. In the new communication scheme, the transmission side performs the carrier sense in the transmission. In the new communication scheme, a super frame of one minute is set as illustrated for example in FIG. 1 in the ten times of packet transmissions for the carrier sense.

FIG. 26 is a diagram illustrating an example of reception of packets on the reception side in the new communication scheme.

The reception side receives ten packets from the transmission side and combines the ten packets (signals of packets) to generate a combined signal as illustrated in FIG. 26. Furthermore, the reception side performs decoding (error correction) or the like of the combined signal to extract data from the combined signal and outputs the data.

In this way, the packets can be combined to generate a combined signal to thereby improve the S/N ratio. For example, when ten packets can be added (combined), the S/N ratio can be improved by approximately 10 dB.

Therefore, in the new communication scheme, the reception side can acquire data even if the S/N ratio per packet is low, and the information can be transferred for a longer distance. Furthermore, in the new communication scheme, the transmission time of packets can be set to equal to or less than 0.2 seconds or equal to or less than 0.4 seconds as described above to thereby use more frequency channels without being restricted by the ARIB standard.

In the new communication scheme, frequency hopping can be performed by using a plurality of carrier frequencies, for example.

FIG. 27 is a diagram illustrating an example of the frequency hopping.

In the frequency hopping of FIG. 27, five channels including CH1 to CH5 are prepared, and any one of the five channels is selected to transmit and receive each packet. Examples of the selection method of the channel include a method of increasing the transmission channel number according to the order of transmission, a method of setting the transmission channel number according to a predetermined formula, and a method of randomly selecting the transmission channel number. According to the frequency hopping, the occurrence of interference can be suppressed.

FIG. 28 is a diagram illustrating an example of a wireless system in which an interference may occur.

The wireless system of FIG. 28 includes a plurality of transmitters (transmitter A to transmitter C) and one receiver.

In the wireless system of FIG. 28, there is a case in which a plurality of transmitters simultaneously transmits radio signals at the same carrier frequency. When a plurality of transmitters simultaneously transmits the radio signals at the same carrier frequency, an interference occurs in the receiver, and it is difficult for the receiver to correctly receive the radio signals from the plurality of transmitters.

Therefore, the frequency hopping of FIG. 27 is applied to the wireless system of FIG. 28. In this case, the possibility of using the same carrier frequency can be reduced, and this can suppress the occurrence of interference.

However, the one-way communication is used in the wireless system of FIG. 28, and the same carrier frequency may be used by the plurality of transmitters even if the frequency hopping is performed. Therefore, it is difficult to completely prevent the interference.

FIG. 29 is a diagram illustrating an example of an interference in the case where the frequency hopping is performed in the wireless system.

In FIG. 29, the transmitters A and B perform the frequency hopping. The same carrier frequency is used for a packet transmitted from the transmitter A and a packet transmitted from the transmitter B at the same time, and the radio signals (packets) of the transmitters A and B collide. In this way, when the radio signals collide, the receiver cannot separate the packets from different transmitters, and there may be an error in the ultimately acquired data.

For example, it is assumed in FIG. 29 that the receiver receives radio signals from the transmitter A. It is also assumed that one of the packets transmitted from the transmitter A collides with a packet transmitted from the transmitter B, and the radio signal transmitted from the transmitter B is stronger than the radio signal transmitted from the transmitter A. In this case, the receiver uses the collided packet of the transmitter B as the packet from the transmitter A and combines the packets. Therefore, an error occurs in the combined signal, and the data may not be extracted. In this case, all the transmission and the reception of the ten packets in the super frame may become useless.

In two-way communication, each of the transmitters A and B and the receiver can mutually transfer necessary information to prompt retransmission, for example. However, it is difficult to supply information from the reception side to the transmission side in the one-way communication, and it is difficult to take measures against the collision of packets that are possible in the two-way communication.

### <Position Notification System>

FIG. 30 is a diagram illustrating a configuration example of a position notification system as an embodiment of the wireless system applying the new communication scheme.

A position notification system 300 of FIG. 30 includes transmission apparatuses 301 (transmission apparatus 301-1 to transmission apparatus 301-3), base stations 302 (base station 302-1 and base station 302-2), a cloud server 303, and an information processing terminal 304.

In the position notification system 300, the transmission apparatuses 301 perform wireless communication of the new communication scheme with the base station 302, and a position monitoring service for monitoring the positions of the transmission apparatuses 301 is provided.

The transmission apparatus 301 uses a radio signal to transmit position information indicating the position of the transmission apparatus 301. The base station 302 includes a reception apparatus 312. The reception apparatus 312 receives the radio signal from the transmission apparatus 301 to acquire the position information of the transmission apparatus 301 and supplies the position information and the like to the cloud server 303. Therefore, the base station 302 including the reception apparatus 312 functions as a relay station that relays the information transmitted from the transmission apparatus 301 to transfer the information to the cloud server 303. The cloud server 303 manages various types of information, such as the position information of each transmission apparatus 301, and provides, for example, a service for notifying the user of the position of the transmission apparatus 301. For example, the information processing terminal 304 operated by the user who wants to know the position of the transmission apparatus 301 accesses the cloud server 303 to acquire the position information of the transmission apparatus 301 and notifies the user of the position of the transmission apparatus 301 by, for example, displaying the position information along with map data or the like.

The transmission apparatus 301 is carried by, for example, an elderly person or the like, whose position needs to be monitored by the user.

The transmission apparatus 301 includes a position sensor that uses, for example, a GNSS (Global Navigation Satellite System) to acquire the position information of the transmission apparatus 301. That is, the transmission apparatus 301 includes a reception mechanism as a position sensor that receives a GPS signal from, for example, a GPS (Global Positioning System) satellite and appropriately obtains the position information (for example, latitude, longitude, and the like) of the transmission apparatus 301. The transmission apparatus 301 appropriately transmits the position information as a radio signal.

Note that the transmission apparatus 301 is provided with various sensors other than the position sensor, and the transmission apparatus 301 can use radio signals to transmit sensor information output by the sensors. For example, the transmission apparatus 301 can be provided with a sensor that senses biological information, such as pulse and heart rate, a sensor that senses the temperature, the humidity, and the like, and a sensor that detects open/close of a gate, a door, and the like.

In FIG. 30, the transmission apparatus 301-1 is carried by an elderly person 311-1 in Tokyo. The transmission apparatus 301-2 is carried by an elderly person 311-2 in Yokohama. The transmission apparatus 301-3 is carried by an elderly person 311-3 in Shizuoka.

In addition, the transmission apparatuses 301 include unique identification information (ID). For example, in FIG. 30, the identification information of the transmission apparatus 301-1 is 0001 (ID=0001). The identification information of the transmission apparatus 301-2 is 0002 (ID=0002). The identification information of the transmission apparatus 301-3 is 0003 (ID=0003). The identification information of the transmission apparatuses 301 is registered in the cloud server 303.

Note that the target of monitoring the position is arbitrary. For example, the target of monitoring the position may be a child, an animal (pet), such as a dog and a cat, an employee of a company, or the like. Although three transmission apparatuses 301 are illustrated in FIG. 30, the number of transmission apparatuses 301 is arbitrary. The transmission apparatus 301 may be included as a dedicated apparatus or may be incorporated into a mobile information processing apparatus, such as a mobile phone and a smartphone.

The base station 302 may be any equipment. For example, the base station 302 may be a dedicated facility or structure. In addition, the base station 302 may be, for example, equipment that can be installed on the roof, the rooftop, or the like of a structure, such as a general building, an apartment, and a house. Furthermore, the base station 302 may be, for example, mobile equipment that can be carried by the user or installed on a moving body such as a car.

A plurality of base stations 302 is installed. For example, in the case of FIG. 30, the base station 302-1 is set in Tokyo, and the base station 302-2 is installed in Fuji. Although two base stations 302 are illustrated in FIG. 30, the number of base stations 302 is arbitrary.

The base station 302 includes the reception apparatus 312. The reception apparatus 312 receives a radio signal from the transmission apparatus 301 and provides information (data) included in the radio signal to the cloud server 303. In addition, the reception apparatus 312 acquires, from the cloud server 303, necessary information, such as a parameter set (for example, modulation rate of radio signal, on/off of frequency hopping, and the like) as wireless format information for determining the wireless format of the wireless communication. The method for the reception apparatus 312 to acquire the information from the cloud server 303 is arbitrary.

The configuration of the cloud server 303 is arbitrary, and for example, the cloud server 303 may include an arbitrary number of servers, an arbitrary number of networks, and the like. A plurality of cloud servers 303 may also be provided.

In the position notification system 300, the transmission apparatus 301 sets the frequency hopping based on the identification information (ID) of the transmission apparatus 301. That is, the transmission apparatus 301 sets the transmission timing and the transmission frequency of each packet based on the identification information and transmits each packet based on the setting. The frequency hopping can be used in this way to transmit the packets to thereby suppress the interference. That is, the information can be more surely transferred.

In addition, the transmission apparatus 301 can set the transmission timing and the transmission frequency based on the identification information, and the pattern of the transmission timing and the transmission frequency can be changed for each transmission apparatus 301. In this case, a collision of the packets transmitted from different transmission apparatuses 301 can be suppressed. That is, the information can be more surely transferred.

In addition, the reception apparatus 312 of the base station 302 acquires the identification information of the transmission apparatus 301 from the cloud server 303 and receives the packets based on the identification information. That is, the reception apparatus 312 sets the reception timing and the reception frequency based on the identification information as in the setting of the transmission timing and the transmission frequency of the transmission apparatus 301. If the reception apparatus 312 can use the identification information of the transmission apparatus 301 to specify the transmission timing and the transmission frequency of the packet, it is sufficient that the packet is detected regarding the transmission timing and the transmission frequency (that is, it is sufficient that the reception timing and the reception frequency are brought into line with the transmission timing and the transmission frequency). As a result, the packet can be more easily detected even if the S/N ratio is low. Therefore, the packets can be received with higher sensitivity. That is, the information can be more surely transferred. In addition, the process, such as detection of packets, does not have to be executed at unnecessary timing or in an unnecessary frequency band. Therefore, an increase in load can be suppressed.

In addition, priorities can be provided to the identification information of the transmission apparatus 301. In the case where the priorities are provided to the identification information of the transmission apparatus 301 acquired from the cloud server 303, the reception apparatus 312 can receive the radio signals (packets) from the transmission apparatus 301 identified by the identification information according to the priorities of the identification information. In this case, the information can be more surely transferred.

Note that the reception apparatus 312 can supply, as reception information, information regarding the reception of radio signals, such as the transmission apparatus 301 that has transmitted the radio signal, the time of the reception of the radio signal, and the content of the radio signal (data extracted from the radio signal), to the cloud server 303.

The cloud server 303 registers, in advance, information regarding the transmission apparatus 301 (also referred to as terminal information) and information regarding the user (also referred to as subscriber information) and manages the information. The terminal information can include, for example, the identification information of the transmission apparatus 301, the information of the frequency of transmission, the main location, and the like. In addition, the subscriber information can include, for example, information regarding the name, age, sex, address, and payment of the user (person who receives the position notification service), the identification information of the transmission apparatus used, the login ID, the password, and the like. Obviously, each of the terminal information and the subscriber information may include any information, and the information is not limited to the examples described above.

In addition, the cloud server 303 provides the identification information of the transmission apparatus 301 to the reception apparatus 312 of each base station 302 (part or all of the base stations 302) at predetermined timing or in response to a request from the reception apparatus 312 or the like. In this case, the cloud server 303 can supply each base station 302 with the identification information of the transmission apparatus 301 from which the base station 302 is likely to receive the radio signal. In other words, the cloud server 303 may not supply, to each base station 302, the identification information of the transmission apparatus 301 from which the base station 302 is unlikely to receive the radio signal. In this way, the detection of unnecessary packets in the reception apparatus 312 of the base station 302 can be reduced, and an increase in load can be suppressed.

In addition, the probability of a collision of packets increases with an increase in the number of transmission apparatuses 301 from which the base station 302 receives radio signals. More precisely, it is unlikely that the packets arrive from the transmission apparatus 301 from which the base station 302 is unlikely to receive radio signals. Therefore, the probability of a collision of packets is not actually increased. However, in the setting of the reception timing and the reception frequency performed in the base station 302, the probability of a collision of packets increases with an increase in the number of target transmission apparatuses 301. In this way, in a case where there is a collision of packets in setting the reception timing and the reception frequency, the packets are not received. Therefore, if the reception targets also include the transmission apparatus 301 from which the base station 302 is unlikely to receive radio signals, the reception sensitivity is unnecessarily reduced, and the certainty of the transfer of information may be unnecessarily reduced. As described above, the cloud server 303 may not supply the identification information of the transmission apparatus 301 from which the base station 302 is unlikely to receive radio signals, and as a result, the base station 302 can remove the transmission apparatus 301 from the reception targets. In this case, the reduction in reception sensitivity can be suppressed, and the information can be more surely transferred.

In addition, the cloud server 303 acquires reception information obtained by receiving the radio signal from the reception apparatus 312 of the base station 302. The cloud server 303 manages, for example, a history of transmission and reception of information between the transmission apparatus 301 and the reception apparatus 312 (for example, which transmission apparatus 301 has transmitted the radio signal, which base station 302 includes the reception apparatus 312 that has received the radio signal, and when the reception apparatus 312 has received the radio signal) based on the reception information. The cloud server 303 selects the transmission apparatus 301 that supplies the identification information to the base station 302 based on the history and supplies the identification information (list of identification information (LEID (List of Expected ID))) to the reception apparatus 312 of the base station 302 according to the selection result. In this way, the identification information of the transmission apparatus 301 can be supplied to the reception apparatus 312 of each base station 302 based on the past communication history, and the possibility of the reception apparatus 312 of each base station 302 receiving the radio signal of each transmission apparatus 301 can be more accurately determined. Therefore, each base station 302 can more surely transfer the information.

Furthermore, the cloud server 303 can provide, for example, the position of the transmission apparatus 301 (elderly person 311) to the information processing terminal 304 based on the reception information from the reception apparatus 312.

Note that the identification information of the transmission apparatus 301 may be supplied from the cloud server 303 to the base station 302 in any format. For example, the cloud server 303 may supply the identification information of the transmission apparatus 301 as a priority list to the base station 302. The priority list is information including a list of the identification information of the transmission apparatuses 301 from which the base station 302 provided with the priority list is likely to receive radio signals. For example, the cloud server 303 may generate the priority list for each base station 302 and supply the priority list to the base station 302. The base station 302 provided with the priority list may execute a process of receiving the radio signals from the transmission apparatuses 301 with the identification information indicated in the priority list. In addition, the priority of reception in the base station 302 may be added to the identification information of the transmission apparatus 301 supplied to the base station 302. For example, the priority list described above may include the priority of each piece of identification information. In addition, the base station 302 provided with the priority list may set the order of priority of signal reception or the like based on the priorities included in the priority list. In this way, the cloud server 303 can not only control the transmission apparatuses 301 from which the base station 302 receives the radio signals, but can also control the order of priorities of the reception. As for the priority, the communication distance can be obtained from the difference between the position of the base station 302 and the position information transmitted by the transmission apparatus 301, and the priority can be changed according to the communication distance.

### <Configuration Example of Transmission Apparatus>

FIG. 31 is a block diagram illustrating a configuration example of the transmission apparatus 301.

The transmission apparatus 301 includes a GPS signal reception unit 401, a payload data generation unit 402, an ID/CRC addition unit 403, an FEC processing unit 404, a repetition unit 405, a guard bit addition unit 406, a key stream generation unit 411, an AND gate 412, an EXOR gate 413, a gold code generation unit 414, an EXOR gate 415, a sync generation unit 421, an interleave unit 422, a modulation unit 423, and a frequency/timing control unit 424.

The GPS signal reception unit 401 receives a GPS signal to acquire a 1PPS (pulse/second) signal as a clock signal and current time (GPS time) included in the GPS signal and supplies them to the frequency/timing control unit 424. In addition, the GPS signal reception unit 401 acquires position information (latitude, longitude, and altitude) of the transmission apparatus 301 from the GPS signal and supplies, to the payload data generation unit 402, the position information as sensor information obtained by sensing the position.

The payload data generation unit 402 uses the position information as the sensor information from the GPS signal reception unit 401 to generate payload data as a payload of the radio signal and supplies the payload data to the ID/CRC addition unit 403. Note that the information as the payload data is not limited to the position information or the sensor information. The information as the payload data can be determined according to, for example, the application or the like applying the wireless system. However, the new communication scheme is a type of new communication scheme of the LPWA communication that can transfer information in a wide range of several dozen to 100 km with low power consumption, and it is desirable that the size of the information as the payload data be a size suitable for the LPWA communication.

The ID/CRC addition unit 403 adds an ID (identification information) of the transmission apparatus 301 and a CRC (Cyclic Redundancy Check) code to the payload data from the payload data generation unit 402 to generate an FEC target unit as a target of an FEC (Forward Error Correction) process and supplies the FEC target unit to the FEC processing unit 404. Note that the ID/CRC addition unit 403 generates the CRC code in relation to the payload data or in relation to the payload data and the ID.

The FEC processing unit (coding unit) 404 applies the FEC process to the FEC target unit from the ID/CRC addition unit 403 and supplies an FEC frame obtained as a result of the FEC process to the repetition unit 405.

That is, the FEC processing unit 404 performs error correction coding of the FEC target unit in the FEC process of the FEC target unit and supplies an error correction code obtained by the error correction coding to the repetition unit 405.

Specifically, the FEC processing unit 404 performs, for example, LDPC coding of the FEC target unit and supplies an LDPC code obtained by the LDPC coding to the repetition unit 405.

Note that the error correcting code is not limited to the LDPC code. Examples of the error correcting code that can be adopted include a convolutional code and a turbo code.

The repetition unit 405 repeatedly arranges the LDPC codes from the FEC processing unit 404 to generate a repeating unit and supplies the repeating unit to the guard bit addition unit 406.

The guard bit addition unit 406 adds (inserts) guard bits to the repeating unit from the repetition unit 405 and supplies the repeating unit to the EXOR gate 413.

The key stream generation unit 411 generates a key stream used for encryption and supplies the key stream to the AND gate 412.

In addition to the key stream from the key stream generation unit 411, a switching signal for switching enable/disable of encryption in the EXOR gate 413 is also supplied to the AND gate 412.

The switching signal is, for example, a signal indicating logic 1 (for example, High level) in a case of enabling the encryption and logic 0 (for example, Low level) in a case of disabling the encryption. The switching signal can be set according to, for example, the application. The switching signal can be set to enable the encryption of all or part of the repeating unit supplied from the guard bit addition unit 406 to the EXOR gate 413. In addition, the switching signal can be set to disable the encryption of the entire repeating unit supplied from the guard bit addition unit 406 to the EXOR gate 413.

The AND gate 412 calculates a logical product of the switching signal and the key stream from the key stream generation unit 411 and supplies the logical product to the EXOR gate 413. As a result, the key stream is supplied from the AND gate 412 to the EXOR gate 413 only in a period in which the encryption is enabled in the switching signal.

The EXOR gate 413 calculates an exclusive OR of the repeating unit from the guard bit addition unit 406 and the key stream from the AND gate 412 to encrypt the repeating unit by using stream cipher (scheme). The EXOR gate 413 supplies the repeating unit after the encryption to the EXOR gate 415.

Here, the EXOR gate 413 encrypts the repeating unit in a period in which the key stream is supplied from the AND gate 412, that is, a period in which the switching signal indicates logic 1. Therefore, in the EXOR gate 413, all or part of the repeating unit may be encrypted, or the entire repeating unit may not be encrypted.

The gold code generation unit 414 uses, for example, two M sequence generators to generate, for example, a gold code as a scrambled sequence in the same size (the number of bits) as the repeating unit from the EXOR gate 413 and supplies the gold code to the EXOR gate 415.

The EXOR gate 415 calculates an exclusive OR of the repeating unit from the EXOR gate 413 and the scrambled sequence from the gold code generation unit 414 to scramble the repeating unit and supplies the repeating unit to the interleave unit 422.

The sync generation unit 421 generates, for example, a predetermined PN (Pseudo Noise) sequence, such as an M sequence, as a synchronization signal and supplies the synchronization signal to the interleave unit 422. Note that the synchronization signal generated by the sync generation unit 421 is a known signal in the transmission apparatus 301 and the reception apparatus 312. Since the synchronization signal is known in the transmission apparatus 301 and the reception apparatus 312, the reception apparatus 312 can perform synchronous detection of the radio signals from the transmission apparatus 301 and can robustly receive the radio signals from the transmission apparatus 301. The initial value of the M sequence may be any value common to the transmission and the reception. In addition, the initial value of the M sequence can also be changed according to the ID.

The interleave unit 422 interleaves (multiplexes) a bit sequenced d(0), d(1), ... as the repeating unit from the EXOR gate 413 and a bit sequence r(0), r(1), ... as the synchronization signal from the sync generation unit 421 and supplies an interleave sequence r(0), d(0), r(1), d(1), ... or r(0), d(0), d(832), r(1), d(1), ... obtained by the interleaving to the modulation unit 423.

The modulation unit 423 uses the interleave sequence supplied from the interleave unit 422 to perform, for example, modulation, such as π/2 shift BPSK (π/2 Shift Binary Phase Shift Keying) modulation and chirp modulation, and transmits a radio signal in, for example, the 920 MHz band as a modulation signal obtained by the modulation. Note that the modulation unit 423 transmits the radio signal at the transmission timing and the transmission frequency according to the control by the frequency/timing control unit 424.

The frequency/timing control unit 424 sets the transmission timing and the transmission frequency of the radio signal transmitted by the modulation unit 423 according to the ID or the like of the transmission apparatus 301 and controls the modulation unit 423 to transmit the radio signal at the transmission timing and the transmission frequency. The frequency/timing control unit 424 controls the modulation unit 423 in synchronization with the clock signal from the GPS signal reception unit 401. That is, the frequency/timing control unit 424 recognizes whether or not the current timing is grid timing (grid time) that is known (predetermined) timing in the transmission apparatus 301 and the reception apparatus 312 according to, for example, the clock signal from the GPS signal reception unit 401 and controls the modulation unit 423 to start the transmission of the packet at the grid timing.

### <Configuration Example of Reception Apparatus>

FIG. 32 is a block diagram illustrating a configuration example of the reception apparatus 312.

The reception apparatus 312 includes a GPS signal reception unit 431, an ID/transmission pattern acquisition unit 432, a frequency/timing control unit 433, a demodulation unit 434, and a decoding unit 435.

The GPS signal reception unit 431 receives a GPS signal to acquire a 1PPS signal and GPS time included in the GPS signal and supplies them as a clock signal to the frequency/timing control unit 433.

The ID/transmission pattern acquisition unit 432 acquires, for example, an ID of the transmission apparatus 301, from which the reception apparatus 312 is to receive the radio signal, and a transmission frequency that is a pattern of the transmission timing and the transmission frequency from the cloud server 303 and supplies them to the frequency/timing control unit 433.

The frequency/timing control unit 433 sets the reception timing and the reception frequency of the radio signal in the demodulation unit 434 according to the transmission pattern from the ID/transmission pattern acquisition unit 432 and controls the demodulation unit 434 to receive the radio signal at the reception timing and the reception frequency. The frequency/timing control unit 433 controls the demodulation unit 434 in synchronization with the clock signal from the GPS signal reception unit 431 as in the frequency/timing control unit 424 of FIG. 31.

Here, as described above, both of the control of the transmission timing and the transmission frequency of the modulation unit 423 (FIG. 31) and the control of the reception timing and the reception frequency of the demodulation unit 434 are performed in synchronization with the clock signal and the time information (GPS time) obtained from the GPS signal. In this way, the transmission timing and the transmission frequency of the modulation unit 423 and the reception timing and the reception frequency of the demodulation unit 434 can be accurately brought into line with each other.

The demodulation unit 434 receives the radio signal from the transmission apparatus 301 at the reception timing and the reception frequency according to the control of the frequency/timing control unit 433 and performs FFT (Fast Fourier Transform) or the like of the radio signal to demodulate the radio signal. The demodulation unit 434 supplies a demodulation signal obtained by the demodulation of the radio signal to the decoding unit 435. Note that in the demodulation of the demodulation unit 434, for example, the synchronization signal is used to perform synchronous detection, and the combining described in FIG. 26 is also performed.

The decoding unit 435 decodes an LDPC code included in the decoding signal from the demodulation unit 434 to perform error correction and outputs sensor information included in payload data obtained as a result of the error correction. The sensor information is transmitted from the reception apparatus 312 to the cloud server 303.

### <Format of Data Handled by Transmission Apparatus>

FIG. 33 is a diagram illustrating an example of a first format of data (signal) handled by the transmission apparatus 301.

Here, in the new communication scheme, examples of the modulation rate (transfer rate) of the modulation performed by the modulation unit 423 include 6.35 kbps and 50.8 kbps.

FIG. 33 illustrates a format of the data of the case in which the modulation rate is 6.35 kbps of the 6.35 kbps and the 50.8 kbps.

In the new communication scheme, examples of prepared setting modes of the payload data include three types of modes including MSDU Type-1, MSDU Type-2, and MSDU Type-3.

The payload data is, for example, a unit of 128 bits called MSDU (MAC (Media Access Control) Service Data Unit), and in the MSDU Type-1, the MSDU Type-2, and the MSDU Type-3, 128 bits, 64 bits, and 1 bit are used to transfer real data (user data), respectively.

That is, in the MSDU Type-1, the payload data generation unit 402 uses the 128 bits of real data (sensor information or the like) as it is to configure (generate) 128 bits of MSDU. In the MSDU Type-2, the payload data generation unit 402 pads 64 bits of 0 to 64 bits of real data to configure 128 bits of MSDU. In the MSDU Type-3, the payload data generation unit 402 pads 127 bits of 0 to 1 bit of real data to configure 128 bits of MSDU.

The ID/CRC addition unit 403 adds 32 bits of ID of the transmission apparatus 301 and 24 bits of CRC code to the 128 bits of MSDU to form 184 bits of unit called PSDU (Physical Layer Service Unit) as an FEC target unit.

The FEC processing unit 404 codes the 184 bits of PSDU into an LDPC code in which, for example, a code length N is 736 bits, and a coding rate r is 1/4. As a result, 736 bits (=184×4/1) of LDPC code (encoded bits) are formed.

In the first format with the modulation rate of 6.35 kbps, 736 bits of LDPC code are repeated twice, and furthermore, 184 bits as part of the 736 bits of LDPC code are repeated. As a result, 1656 bits (= 736 bits × 2 + 184 bits) of repeating unit are formed.

That is, in the first format, the repeating unit is formed by repeatedly arranging the 736 bits of LDPC code twice and further arranging 184 bits as part of the 736 bits of LDPC code.

The 184 bits as part of the 736 bits of LDPC code arranged in the repeating unit can be, for example, top 184 bits of the 736 bits of LDPC code. In addition, the 184 bits as part of the 736 bits of LDPC code arranged in the repeating unit can be selected according to, for example, a predetermined optimization pattern.

The guard bit addition unit 406 adds (inserts) guard bits to the repeating unit.

That is, 4 guard bits (G) are added to each of the top and the end of the repeating unit.

As a result of adding the guard bits, the 1656 bits of repeating unit are changed to 1664 bits (= 1656 bits + 4 bits × 2) of repeating unit.

An example of the 4 guard bits that can be adopted includes 4 bits of 0.

Here, in the FFT of the repeating unit performed by the demodulation unit 434 (FIG. 32) of the reception apparatus 312, the signal quality is degraded at edges of the repeating unit. To handle the degradation in signal quality, the guard bits are added to each of the top and the end of the repeating unit.

The EXOR gate 413 calculates an exclusive OR of the repeating unit and the key stream, and as a result, the repeating unit becomes an encryption stream.

Here, in the case where the setting mode of the payload data is MSDU Type-2 or MSDU Type-3, part of the 128 bits of MSDU as payload data is padded 0. In the MSDU Type-2, 64 bits of 0 are padded to the 64 bits of real data, and therefore, a half of the 128 bits of MSDU is 0. In other words, a half of the MSDU is meaningless information. In the MSDU Type-3, 127 bits of 0 are padded to the 1 bit of real data, and therefore, most of the 128 bits of MSDU is meaningless information.

The new communication scheme is a scheme that can maximize and effectively utilize the wireless energy sent out to the communication path in the case where a large amount of meaningless information is included (in the case of MSDU Type-2 or MSDU Type-3). That is, in the new communication scheme, the data generated as padded 0 (part or all of the padded 0) may not be encrypted. In the case where the padded 0 is not to be encrypted, a switching signal for disabling the encryption in the period of the padded 0 in the repeating unit is supplied to the AND gate 412. The AND gate 412 supplies a key stream to the EXOR gate 413 according to the switching signal, and as a result, the EXOR gate 413 uses the key stream from the AND gate 412 to encrypt the repeating unit only in the period in which the encryption is not disabled, that is, in the period in which the encryption is enabled, in the repeating unit. The part with disabled encryption is not encrypted, and the padded 0 data is output as it is. In this way, it is known in the reception apparatus 312 that the part with disabled encryption is 0 data. Therefore, the demodulation unit 434 of the reception apparatus 312 can handle the signal of the part with disabled encryption as a synchronization signal, and the synchronization performance can be improved. Furthermore, the decoding unit 435 can decode the part with disabled encryption as known data "0," and the performance of error correction can be improved. That is, in a case where the payload is short, the encryption is partially disabled to improve the performance of the reception apparatus 312. The improvement in performance can realize equivalent communication performance even if the transmission antenna power is reduced to a level lower than that of a case in which, for example, the encryption is not partially disabled.

The encryption stream includes 1664 bits as in the repeating unit before the encryption.

The EXOR gate 415 calculates an exclusive OR of the 1664 bits of encryption stream and the gold code as a scrambled sequence to scramble the encryption stream, and the encryption stream becomes a scrambled stream.

The scrambled stream is 1664 bits of bit sequence d(0), d(1), ..., d(1663) as in the encryption stream before scrambling.

In the first format with the modulation rate of 6.35 kbps, the sync generation unit 421 generates, for example, a bit sequence r(0), r(1), ... r(831) as 832 bits of synchronization signal (Sync).

Therefore, in the first format with the modulation rate of 6.35 kbps, the ratio of the length of the synchronization signal and the length of the scrambled stream is 832:1664=1:2.

The bit sequence r(0), r(1), ... r(831) as 832 bits of synchronization signal and the bit sequence d(0), d(1), ..., d(1663) as 1664 bits of scrambled stream are interleaved by the interleave unit 422. As a result, a bit sequence r(0), d(0), d(832), r(1), d(1), d(833) ... as 2496 bits of PPDU (Presentation Protocol Data Unit) is generated, including cyclically inserted bits as synchronization signals.

Here, the bit sequence r(0), r(1), ..., r(831) as 832 bits of synchronization signal and the bit sequence d(0), d(1), ..., d(1663) as 1664 bits of scrambled stream are interleaved according to, for example, the following C program. Note that PPDU(n) represents an (n+1)th bit from the top of the 2496 bits of PPDU, and (n % x) represents a remainder after dividing n by x. A symbol "==" denotes that whether or not the calculation results are equal is determined. Furthermore, in calculation of division with n as a dividend (such as n/3), the value is rounded off to the nearest decimal.

```
         for(n=0; n<2496; n++) {
                 if ((n % 3) ==0) PPDU(n) =r (n/3);
                 if ((n % 3) ==1) PPDU(n) =d (n/3);
                 if ((n % 3) ==2) PPDU(n) =d (n/3+1);
}
```

For the 2496 bits of PPDU, the modulation unit 423 applies π/2 shift BPSK modulation at 6.35 kbps and further applies chirp modulation at 400 kHz/s. In addition, the 2496 bits of PPDU are transmitted as a radio signal.

In the case where the π/2 shift BPSK modulation at 6.35 kbps is applied to the 2496 bits of PPDU, the transmission (transfer) time of the 2496 bits of PPDU is approximately 393.2 ms. Therefore, the transmission of the 2496 bits of PPDU is transmission of equal to or less than 0.4 seconds, and the ARIB standard of 920 MHz band is satisfied.

In the chirp modulation, for example, a frequency shift of approximately -78.6 kHz is provided at the start of the transmission of PPDU in the transmission time of approximately 393.2 ms. In the chirp modulation of 400 kHz/s, the frequency linearly changes at a change rate of 400 kHz/s, and the frequency shift at the end of the transmission of PPDU in the transmission time of approximately 393.2 ms is approximately +78.6 kHz.

For example, in the case where the frequency of carrier (center frequency) is 925 MHz, the chirp modulation linearly changes the signal frequency of the radio signal from 924.9214 MHz to 925.0786 MHz. As a result of the chirp modulation, the frequency use efficiency improves even in the case where the modulation rate of 6.35 kbps is used, and the system is resistant to interference. In addition, the characteristics of the chirp modulation can reduce the amount of calculation in the synchronization detection.

In the first format, the transmission apparatus 301 repeats the transmission of PPDU as packets for four times, for example. In this case, the time required for the four times of transmission of PPDU is approximately 1.57 seconds (= 393.2 ms × 4).

Note that in the present embodiment, one type of LDPC code with the code length N of 736 bits and the coding rate r of 1/4 is prepared as the LDPC code. On the other hand, the 184 bits of PSDU as the FEC target unit are formed by padding of 0 regardless of whether the setting mode of the payload data is MSDU Type-1, MSDU Type-2, or MSDU Type-3, and one type of LDPC code is used to perform the LDPC coding of the 184 bits of PSDU. Alternatively, for example, an LDPC code of each setting mode may be prepared for each setting mode, and the LDPC code of the setting mode may be used to perform the LDPC coding of the real data of each setting mode without the padding of 0.

However, in the case where the LDPC code of each setting mode is prepared, the transmission apparatus 301 needs to store a check matrix of the LDPC code of each setting mode, and a process, such as switching the check matrix for each setting mode, is necessary in the LDPC coding. On the other hand, in the case where the transmission apparatus 301 uses one type of LDPC code with the code length N of 736 bits and the coding rate r of 1/4, only the check matrix of one type of LDPC code needs to be stored for the LDPC code, and the check matrix does not have to be switched. Therefore, the load can be reduced, and the power consumption can be reduced.

FIG. 34 is a diagram illustrating an example of a second format of data handled by the transmission apparatus 301.

That is, FIG. 34 illustrates a format of the data of the case in which the modulation rate is 50.8 kbps of the 6.35 kbps and the 50.8 kbps.

In the second format, the MSDU as payload data, the PSDU as an FEC target unit, and the LDPC coding are similar to the case of the first format (FIG. 33), and the description will not be repeated.

In the second format with the modulation rate of 50.8 kbps, 736 bits of LDPC code are repeated six times, and furthermore, 384 bits as part of the 736 bits of LDPC code are repeated. As a result, 4800 bits (= 736 bits × 6 + 384 bits) of repeating unit are formed.

That is, in the second format, the repeating unit is formed by repeatedly arranging the 736 bits of LDPC code six times and further arranging 384 bits as part of the 736 bits of LDPC code.

The 384 bits as part of the 736 bits of LDPC code arranged in the repeating unit can be, for example, top 384 bits of the 736 bits of LDPC code. In addition, the 384 bits as part of the 736 bits of LDPC code arranged in the repeating unit can be selected according to, for example, a predetermined optimization pattern.

Four guard bits (G) are added to each of the top and the end of the repeating unit as in the case of the first format. As a result of adding the guard bits, the 4800 bits of repeating unit are changed to 4808 bits (= 4800 bits + 4 bits × 2) of repeating unit.

Subsequently, in the second format, the 4808 bits of repeating unit are encrypted to form an encryption stream, and the repeating unit is further scrambled to form a scrambled stream as in the case of the first format.

In the second format, the scrambled stream is 4808 bits of bit sequence d(0), d(1), ..., d(4807) in the same size as the size of the repeating unit provided with the guard bits.

In addition, the sync generation unit 421 in the second format generates, for example, a bit sequence r(0), r(1), ... r(4087) as 4808 bits of synchronization signal (Sync) in the same size as the size of the scrambled stream.

Therefore, the ratio of the length of the synchronization signal and the length of the scrambled stream is 4808:4808=1:1 in the second format.

The bit sequence r(0), r(1), ... r(4087) as 4808 bits of synchronization signal and the bit sequence d(0), d(1), ..., d(4807) as 4808 bits of scrambled stream are interleaved by the interleave unit 422. As a result, a bit sequence r(0), d(0), r(1), d(1), ... as 9616 bits (= 4808 bits + 4808 bits) of PPDU is generated, including cyclically inserted bits as synchronization signals.

Here, the bit sequence r(0), r(1), ..., r(4807) as 4808 bits of synchronization signal and the bit sequence d(0), d(1), ..., d(4807) as 4808 bits of scrambled stream are interleaved according to, for example, the following C program.

```
         for(n=0; n<9616; n++) {
                 if ((n % 2) ==0) PPDU(n) =r (n/2);
                 if ((n % 2) ==1) PPDU(n) =d (n/2);
}
```

For the 9616 bits of PPDU, the modulation unit 423 applies π/2 shift BPSK modulation at 50.8 kbps, and the bits are transmitted as radio signals.

In the case where the π/2 shift BPSK modulation at 50.8 kbps is applied to the 9616 bits of PPDU, the transmission time of the 9616 bits of PPDU is approximately 189.4 ms. Therefore, the transmission time of the 9616 bits of PPDU is below 0.2 seconds of the ARIB standard, and the transmission stop time can be shortened to perform the repeated transmission for a plurality of times.

In the second format, the transmission apparatus 301 repeats the transmission of PPDU as packets for 20 times, for example. In this case, the time required for the 20 times of transmission of PPDU is approximately 3.78 seconds (= 189.4 ms × 20). In the second format, the number of repetitions of the transmission is more than that of the first format, and the information can be more surely transferred even if, for example, the transmission is affected by fading or the like. The first format and the second format can be selected according to, for example, the application. For example, which one of the first and second formats is to be used can be determined according to the fading characteristics or the like required in the application.

### <Configuration Example of Key Stream Generation Unit>

FIG. 35 is a block diagram illustrating a configuration example of the key stream generation unit 411 of FIG. 31.

In FIG. 35, the key stream generation unit 411 includes a key generation unit 451, a Nonce generation unit 452, a block cipher unit 453, and a P/S conversion unit 454.

The key stream generation unit 411 generates a key stream used for encryption. In the key stream generation unit 411, 1664 bits of key stream are generated for the first format, and 4808 bits of key stream are generated for the second format.

The key generation unit 451 generates 128 bits of key information. The internal structure of the key generation unit 451 is kept private, and the safety of encryption is ensured. The configuration of the key generation unit 451 may be any configuration as long as the internal structure cannot be easily speculated.

The key generation unit 451 can, for example, acquire the GPS time from the GPS signal reception unit 401 (FIG. 31) and create (generate) the key information by adding zero data so that the number of bits becomes 128 bits. The key generation unit 451 supplies the generated key information to the block cipher unit 453.

The Nonce generation unit 452 generates 128 bits of Nonce (Number used ONCE). It is expected that the value of Nonce varies at each timing of 1/128 of the bit clock.

The Nonce generation unit 452 can include, for example, 128 bits of counter. In this case, the Nonce generation unit 452 can, for example, initialize the counter to a predetermined count value before the start of the transmission of radio signals. The Nonce generation unit 452 can then generate the Nonce by incrementing the count value by 1 at each timing of 1/128 of the bit clock. The Nonce generation unit 452 supplies the generated Nonce to the block cipher unit 453.

The block cipher unit 453 uses the key information from the key generation unit 451 and the Nonce from the Nonce generation unit 452 to generate 128 bits of block cipher and supplies the block cipher to the P/S conversion unit 454.

Examples of the block cipher that can be used include an AES (Advanced Encryption Standard) code and a CLEFIA code.

The P/S conversion unit 454 performs P/S (Parallel to Serial) conversion of the block cipher of 128-bit unit from the block cipher unit 453 into 1-bit unit to generate a serial (1-bit unit) key stream and supplies the key stream to the AND gate 412.

The P/S conversion unit 454 generates 1664 bits of key stream for the first format and generates 4808 bits of key stream for the second format.

### <Process of Transmission Apparatus>

FIG. 36 is a flow chart describing an example of a transmission process of the transmission apparatus 301 of FIG. 31.

In step S301, the payload data generation unit 402 generates an MSDU as payload data and supplies the MSDU to the ID/CRC addition unit 403. The process proceeds to step S302.

In step S302, the ID/CRC addition unit 403 adds the ID of the transmission apparatus 301 and the CRC code to the payload data from the payload data generation unit 402 to generate a PSDU as an FEC target unit. The ID/CRC addition unit 403 supplies the FEC target unit to the FEC processing unit 404, and the process proceeds from step S302 to step S303.

In step S303, the FEC processing unit 404 performs LDPC coding of the FEC target unit from the ID/CRC addition unit 403 and supplies, to the repetition unit 405, an FEC frame equivalent to one codeword of the LDPC code obtained by the LDPC coding. The process proceeds to step S304.

In step S304, the repetition unit 405 generates a repeating unit by repeatedly arranging the LDPC code from the FEC processing unit 404 and supplies the repeating unit to the guard bit addition unit 406. The process proceeds to step S305.

In step S305, the guard bit addition unit 406 adds the guard bits to the repeating unit from the repetition unit 405 and supplies the repeating unit to the EXOR gate 413. The process proceeds to step S306.

In step S306, the EXOR gate 413 encrypts the repeating unit from the guard bit addition unit 406 and supplies an encryption stream obtained as a result of the encryption to the EXOR gate 415. The EXOR gate 415 scrambles the encryption stream from the EXOR gate 413 and supplies a scrambled stream obtained as a result of the scrambling to the interleave unit 422. The process proceeds from step S306 to step S307.

In step S307, the interleave unit 422 interleaves the scrambled stream from the EXOR gate 413 and the synchronization signal from the sync generation unit 421 and supplies a PPDU obtained by the interleaving to the modulation unit 423. The process proceeds to step S308.

In step S308, the modulation unit 423 uses the PPDU supplied from the interleave unit 422 to perform BPSK modulation or chirp modulation to generate and transmit, for example, a radio signal in the 920 MHz band. The process ends.

### <Process of Reception Apparatus>

FIG. 37 is a flow chart describing an example of a reception process of the reception apparatus 312 of FIG. 32.

In step S321, the demodulation unit 434 receives a radio signal from the transmission apparatus 301 and demodulates the radio signal. The demodulation unit 434 supplies a demodulation signal obtained by demodulating the radio signal to the decoding unit 435, and the process proceeds from step S321 to step S322.

In step S322, the decoding unit 435 decodes an LDPC code included in the decoding signal from the demodulation unit 434 and outputs sensor information included in payload data obtained as a result of the decoding. The process ends.

In the position notification system 300 adopting the new communication scheme using the 920 MHz band as described above, the present technique may be applied to the transmission apparatus 301. That is, the transmission apparatus 301 may use the methods described in the first to seventh embodiments to transmit radio signals. In this way, the transmission apparatus 301 can obtain advantageous effects similar to the advantageous effects described above in each embodiment. That is, the present technique can also be applied to the system of the new communication scheme described in the present embodiment to obtain advantageous effects similar to the advantageous effects described above in the first to seventh embodiments.

### <9. Others>

### <Other Communication Systems>

Note that the transmitted and received information is arbitrary. For example, the communication apparatus 100 may transmit transmission information including an image, voice, measurement data, identification information of a device or the like, setting information of parameters, control information such as an instruction, and the like. In addition, the transmission information may include, for example, a plurality of types of information, such as an image and voice, identification information, setting information, and control information, and the like.

In addition, the communication apparatus 100 may be able to transmit, for example, transmission information including information supplied from other apparatuses. For example, the communication apparatus 100 may generate and transmit transmission information including information (sensor output) output from various sensors that perform detection, measurement, and the like of arbitrary variables or amounts of change of the variables regarding an image, light, brightness, saturation, electricity, sound, vibration, acceleration, velocity, angular velocity, power, temperature (not temperature distribution), humidity, distance, area, volume, shape, flow rate, time, time period, magnetism, chemical substance, odor, and the like.

That is, the present technique can be applied to, for example, a system used for an arbitrary use, such as three-dimensional shape measurement, spatial measurement, object observation, movement deformation observation, biological observation, authentication process, monitoring, auto focus, imaging control, illumination control, tracking process, input-output control, electronic device control, and actuator control.

In addition, the present technique can also be applied to, for example, a system in an arbitrary field, such as traffic, medical care, crime prevention, agriculture, livestock industry, mining industry, cosmetics, factories, home appliances, weather, and nature monitoring. For example, the present technique can also be applied to a system that takes an image to be viewed using a digital camera, a mobile device with a camera function, or the like. In addition, the present technique can also be applied to, for example, a system used for traffic, such as an in-vehicle system that images the front, the back, the surroundings, or inside a car, a monitoring camera system that monitors traveling vehicles and roads, and a measurement system that measures the distance between vehicles and the like, for safe drive such as automatic stop, recognition of the state of the driver, and the like. Furthermore, the present technique can also be applied to, for example, a system used for security that uses a monitoring camera for crime prevention, a camera used for personal authentication, or the like. Furthermore, the present technique can also be applied to, for example, a system used for sports, such as a wearable camera, that uses various sensors or the like usable for sports or the like. Furthermore, the present technique can also be applied to, for example, a system used for agriculture that uses various sensors, such as a camera for monitoring the state of the field or produce. Furthermore, the present technique can also be applied to, for example, a system used for livestock industry that uses various sensors for monitoring the state of livestock such as pigs and cows. Furthermore, the present technique can also be applied to, for example, a system that monitors the state of the nature, such as volcanoes, forests, and oceans, a weather observation system that observes, for example, the weather, temperature, humidity, wind velocity, hours of sunshine, and the like, and a system that observes, for example, the ecology of wildlife, such as birds, fish, reptiles, amphibians, mammals, insects, and plants.

### <Computer>

The series of processes described above may be executed by hardware or may be executed by software. In addition, part of the processes may be executed by hardware, and the rest of the processes may be executed by software. In the case where the series of processes are executed by software, a program included in the software is installed on a computer. Here, examples of the computer include a computer incorporated into dedicated hardware and a general-purpose personal computer that can execute various functions by installing various programs.

FIG. 38 is a block diagram illustrating a configuration example of hardware of the computer that uses a program to execute the series of processes described above.

In a computer 900 illustrated in FIG. 38, a CPU (Central Processing Unit) 901, a ROM (Read Only Memory) 902, a RAM (Random Access Memory) 903 are connected to each other through a bus 904.

An input-output interface 910 is also connected to the bus 904. An input unit 911, an output unit 912, a storage unit 913, a communication unit 914, and a drive 915 are connected to the input-output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921, such as a magnetic disk, an optical disk, a magneto-optical disk, and a semiconductor memory.

In the computer configured in this way, the CPU 901 loads, for example, a program stored in the storage unit 913 on the RAM 903 through the input-output interface 910 and the bus 904 and executes the program to execute the series of processes described above. Data and the like necessary for the CPU 901 to execute various processes are also appropriately stored in the RAM 903.

The program executed by the computer (CPU 901) can be applied by recording the program in, for example, the removable medium 921 as a package medium or the like. In this case, the removable medium 921 can be installed on the drive 915 to install the program on the storage unit 913 through the input-output interface 910. In addition, the program can also be provided through a wired or wireless transfer medium, such as a local area network, the Internet, and digital satellite broadcast. In this case, the communication unit 914 can receive the program to install the program on the storage unit 913. Furthermore, the program may be installed in advance on the ROM 902 or the storage unit 913.

### <Supplement>

The embodiments of the present technique are not limited to the embodiments described above, and various changes can be made without departing from the scope of the present technique.

For example, the present technique can also be implemented in any component included in an apparatus or a system (that is, part of the components of the apparatus), such as a processor as a system LSI (Large Scale Integration) or the like, a module using a plurality of processors or the like, a unit using a plurality of modules or the like, and a set having other functions added to the unit.

Note that in the present specification, the system denotes a set of a plurality of constituent elements (such as apparatuses and modules (parts)), and whether or not all of the constituent elements are in the same housing does not matter. Therefore, both of a plurality of apparatuses placed in separate housings and connected through a network and one apparatus including a plurality of modules in one housing are systems.

In addition, for example, the configuration described as one apparatus (or processing unit) may be divided to provide a plurality of apparatuses (or processing units). On the other hand, the configuration described as a plurality of apparatuses (or processing units) may be integrated to provide one apparatus (or processing unit). In addition, a configuration other than the configurations described above may be obviously added to the configuration of each apparatus (or each processing unit). Furthermore, as long as the configuration and the operation of the entire system are substantially the same, part of the configuration of an apparatus (or processing unit) may be included in the configuration of another apparatus (or another processing unit).

In addition, for example, the present technique can be in a form of cloud computing in which a plurality of apparatuses shares one function through a network and cooperatively execute a process.

In addition, for example, the program described above can be executed by an arbitrary apparatus. In this case, it is sufficient that the apparatus can have necessary functions (functional blocks or the like) and obtain necessary information.

In addition, for example, each step described in the flow charts can be executed by one apparatus or can be shared and executed by a plurality of apparatuses. Furthermore, in a case where one step includes a plurality of processes, the plurality of processes included in one step can be executed by one apparatus or can be shared and executed by a plurality of apparatuses. In other words, a plurality of processes included in one step can be executed as processes of a plurality of steps. On the other hand, the processes described as a plurality of steps can also be integrated into one step and executed.

In the program executed by the computer, the processes of the steps describing the program may be executed in chronological order described in the present specification or may be executed in parallel or separately executed at necessary timing such as when the processes are invoked. That is, as long as there is no contradiction, the processes of the steps may be executed in an order different from the order described above. Furthermore, the processes of the steps describing the program may be executed in parallel with processes of other programs or may be executed in combination with processes of other programs.

The plurality of present techniques described in the present specification can be independently implemented alone as long as there is no contradiction. Obviously, arbitrary techniques of the plurality of present techniques can be implemented together. For example, part or all of the present techniques described in any one of the embodiments can also be implemented in combination with part or all of the present techniques described in another embodiment. In addition, part or all of arbitrary present techniques described above can also be implemented together with other techniques not described above.

The present technique can also be configured as follows.
(1) A communication apparatus that performs one-way communication, the communication apparatus including:
   a transmission unit that uses a radio resource according to a frequency of transmission of data of an application to transmit a radio signal corresponding to the data.
(2) The communication apparatus according to (1), in which
   a correspondence between the frequency of transmission and the radio resource is predetermined, and
   the transmission unit uses a radio resource corresponding to the frequency of transmission of the data in the correspondence to transmit the radio signal.
(3) The communication apparatus according to (2), further including:
   a radio resource storage unit that stores the correspondence, in which
   the transmission unit uses a radio resource corresponding to the frequency of transmission of the data obtained based on the correspondence read out from the radio resource storage unit to transmit the radio signal.
(4) The communication apparatus according to (3), in which
   the radio resource includes time slots dividing a time axis, and
   the transmission unit transmits the radio signal in a time slot according to the frequency of transmission.
(5) The communication apparatus according to (4), in which
   in a case where transmission timing of the radio signal coincides with a predetermined frequency of transmission that is preset in the correspondence and that is lower than the frequency of transmission of the data corresponding to the radio signal, the transmission unit uses a time slot corresponding to the predetermined frequency of transmission to transmit the radio signal.
(6) The communication apparatus according to (5), in which
   the radio resource includes frequency channels dividing a frequency axis, and
   the transmission unit transmits the radio signal in a time slot and a frequency channel according to the frequency of transmission.
(7) The communication apparatus according to (6), in which
   in a case where transmission timing of the radio signal coincides with a predetermined frequency of transmission that is preset in the correspondence and that is lower than the frequency of transmission of the data corresponding to the radio signal, the transmission unit uses a preset predetermined channel of a time slot corresponding to the predetermined frequency of transmission to transmit the radio signal.
(8)
   The communication apparatus according to any one of (3) to (7), in which
   the transmission unit uses a radio resource corresponding to any one of the frequency of transmission of the data or the frequency of transmission lower than that of the data in the correspondence to transmit the radio signal.
(9) The communication apparatus according to (8), in which
   the transmission unit selects a radio resource to be used for the transmission of the radio signal according to a status of use of the radio resource.
(10) The communication apparatus according to (9), in which
   the transmission unit selects a radio resource in which a value of correlation with a known preamble obtained by packet detection is lower than a predetermined threshold.
(11) The communication apparatus according to (10), in which
   the lower the frequency of transmission in the correspondence is, the smaller the threshold of the radio resource corresponding to the frequency of transmission is.
(12) The communication apparatus according to any one of (1) to (11), in which
   the transmission unit further transmits the radio signal corresponding to the data at timing according to a minimum frequency of collection of the data of an application on a radio signal reception side.
(13) The communication apparatus according to (12), in which
   in a case where the transmission unit transmits the radio signal at the timing according to the minimum frequency of collection, the transmission unit uses a radio resource according to the minimum frequency of collection to transmit the radio signal.
(14) The communication apparatus according to (13), further including:
   an application information storage unit that stores the minimum frequency of collection of the data of the application on the radio signal reception side, in which
   in a case where the transmission unit transmits the radio signal at the timing corresponding to the minimum frequency of collection read out from the application information storage unit, the transmission unit uses a radio resource corresponding to the minimum frequency of collection to transmit the radio signal.
(15) The communication apparatus according to any one of (1) to (14), in which
   the transmission unit uses a radio resource according to a frequency of transmission corresponding to a length of elapsed time from transmission of last time to transmit the radio signal.
(16) The communication apparatus according to any one of (1) to (15), in which
   the transmission unit repeats the transmission of the radio signal for the number of times according to the frequency of transmission of the data corresponding to the radio signal.
(17) The communication apparatus according to (16), in which
   the lower the frequency of transmission of the data is, the higher the number of times of the transmission of the radio signal repeated by the transmission unit is.
(18) The communication apparatus according to any one of (1) to (17), in which
   the transmission unit uses a dedicated radio resource to transmit a radio signal corresponding to urgent data and uses another radio resource according to the frequency of transmission to transmit a radio signal corresponding to data not urgent.
(19) The communication apparatus according to any one of (1) to (18), in which
   the communication apparatus includes a terminal device of IoT (Internet of Things), and
   the transmission unit uses an LPWA (Low Power Wide Area) communication scheme to transmit the radio signal.
(20) A communication method of a communication apparatus that performs one-way communication, the communication method including:
   using a radio resource according to a frequency of transmission of data of an application to transmit a radio signal corresponding to the data.

### [Reference Signs List]

100 Communication apparatus, 101 Control unit, 110 bus, 111 Wireless communication unit, 112 Radio resource determination unit, 113 Radio resource data storage unit, 114 Transmission data providing unit, 200 Communication apparatus, 211 Application information storage unit, 300 Position notification system, 301 Transmission apparatus, 302 Base station, 303 Cloud server, 304 Information processing terminal, 311 Elderly person, 312 Reception apparatus

## Claims

1. A communication apparatus that performs one-way communication, the communication apparatus comprising:
a transmission unit that uses a radio resource according to a frequency of transmission of data of an application to transmit a radio signal corresponding to the data.

2. The communication apparatus according to claim 1, wherein
a correspondence between the frequency of transmission and the radio resource is predetermined, and
the transmission unit uses a radio resource corresponding to the frequency of transmission of the data in the correspondence to transmit the radio signal.

3. The communication apparatus according to claim 2, further comprising:
a radio resource storage unit that stores the correspondence, wherein
the transmission unit uses a radio resource corresponding to the frequency of transmission of the data obtained based on the correspondence read out from the radio resource storage unit to transmit the radio signal.

4. The communication apparatus according to claim 3, wherein
the radio resource includes time slots dividing a time axis, and
the transmission unit transmits the radio signal in a time slot according to the frequency of transmission.

5. The communication apparatus according to claim 4, wherein
in a case where transmission timing of the radio signal coincides with a predetermined frequency of transmission that is preset in the correspondence and that is lower than the frequency of transmission of the data corresponding to the radio signal, the transmission unit uses a time slot corresponding to the predetermined frequency of transmission to transmit the radio signal.

6. The communication apparatus according to claim 5, wherein
the radio resource includes frequency channels dividing a frequency axis, and
the transmission unit transmits the radio signal in a time slot and a frequency channel according to the frequency of transmission.

7. The communication apparatus according to claim 6, wherein
in a case where transmission timing of the radio signal coincides with a predetermined frequency of transmission that is preset in the correspondence and that is lower than the frequency of transmission of the data corresponding to the radio signal, the transmission unit uses a preset predetermined channel of a time slot corresponding to the predetermined frequency of transmission to transmit the radio signal.

8. The communication apparatus according to claim 3, wherein
the transmission unit uses a radio resource corresponding to any one of the frequency of transmission of the data or the frequency of transmission lower than that of the data in the correspondence to transmit the radio signal.

9. The communication apparatus according to claim 8, wherein
the transmission unit selects a radio resource to be used for the transmission of the radio signal according to a status of use of the radio resource.

10. The communication apparatus according to claim 9, wherein
the transmission unit selects a radio resource in which a value of correlation with a known preamble obtained by packet detection is lower than a predetermined threshold.

11. The communication apparatus according to claim 10, wherein
the lower the frequency of transmission in the correspondence is, the smaller the threshold of the radio resource corresponding to the frequency of transmission is.

12. The communication apparatus according to claim 1, wherein
the transmission unit further transmits the radio signal corresponding to the data at timing according to a minimum frequency of collection of the data of an application on a radio signal reception side.

13. The communication apparatus according to claim 12, wherein
in a case where the transmission unit transmits the radio signal at the timing according to the minimum frequency of collection, the transmission unit uses a radio resource according to the minimum frequency of collection to transmit the radio signal.

14. The communication apparatus according to claim 13, further comprising:
an application information storage unit that stores the minimum frequency of collection of the data of the application on the radio signal reception side, wherein
in a case where the transmission unit transmits the radio signal at the timing corresponding to the minimum frequency of collection read out from the application information storage unit, the transmission unit uses a radio resource corresponding to the minimum frequency of collection to transmit the radio signal.

15. The communication apparatus according to claim 1, wherein
the transmission unit uses a radio resource according to a frequency of transmission corresponding to a length of elapsed time from transmission of last time to transmit the radio signal.

16. The communication apparatus according to claim 1, wherein
the transmission unit repeats the transmission of the radio signal for the number of times according to the frequency of transmission of the data corresponding to the radio signal.

17. The communication apparatus according to claim 16, wherein
the lower the frequency of transmission of the data is, the higher the number of times of the transmission of the radio signal repeated by the transmission unit is.

18. The communication apparatus according to claim 1, wherein
the transmission unit uses a dedicated radio resource to transmit a radio signal corresponding to urgent data and uses another radio resource according to the frequency of transmission to transmit a radio signal corresponding to data not urgent.

19. The communication apparatus according to claim 1, wherein
the communication apparatus includes a terminal device of IoT (Internet of Things), and
the transmission unit uses an LPWA (Low Power Wide Area) communication scheme to transmit the radio signal.

20. A communication method of a communication apparatus that performs one-way communication, the communication method comprising:
using a radio resource according to a frequency of transmission of data of an application to transmit a radio signal corresponding to the data.
